# FASCICULE DE BREVET EUROPEEN

(11) **EP 3 801 062 B1**
(45) Date de publication et mention de la délivrance du brevet: **30.07.2025**
(21) Numéro de dépôt: 19740627.5
(22) Date de dépôt: 28.05.2019
(51) Int. Cl.: A23L 33/105

(54) **COMPLÉMENT ALIMENTAIRE COMPORTANT UN EXTRAIT DE PLANTES HALOPHYTE**
NAHRUNGSERGÄNZUNGSMITTEL MIT EINEM EXTRAKT AN HALOPHYT-PFLANZEN
FOOD SUPPLEMENT COMPRISING AN EXTRACT OF HALOPHYTE PLANTS

(30) Priorité: 01.06.2018 FR 1854798
(43) Date de publication de la demande: 14.04.2021
(73) Titulaire: Université de Bretagne Occidentale, 29238 Brest Cedex 3 (FR)
(72) Inventeur: HYMERY, Nolwenn, 29280 Plouzané (FR); MADEC, Stéphanie, 29480 Le Relecq Kerhuon (FR); DAUVERGNE, Xavier, 29200 BREST (FR); MAGNÉ, Christian, 29200 Brest (FR)
(74) Mandataire: Ipside
(86) Numéro de dépôt international: PCT/FR2019/051260
(87) Numéro de publication internationale: WO 2019/229379

(56) Documents cités:
- WO-A1-2017/191886
- KR-A- 20150 052 532
- DATABASE GNPD [online] MINTEL; 13 December 2016 (2016-12-13), ANONYMOUS: "Natural Blood Purifier", XP055525241, retrieved from https://www.gnpd.com/sinatra/recordpage/4479555/ Database accession no. 4479555
- DATABASE GNPD [online] MINTEL; 12 April 2005 (2005-04-12), ANONYMOUS: "Dog Biscuits", XP055525238, retrieved from https://www.gnpd.com/sinatra/recordpage/10215053/ Database accession no. 10215053
- LEMAY: "Impact d'une ration contaminée par des mycotoxines de Fusarium sur la réponse immunitaire systémique et mucosale et la possible capacité de compléments antioxydants à rétablir le statut immunitaire de porcelets sevrés", 1 January 2017 (2017-01-01), XP055622232, Retrieved from the Internet <URL:https://corpus.ulaval.ca/jspui/bitstream/20.500.11794/27602/1/32871.pdf> [retrieved on 20190913]
- MAN HEE RHEE ET AL: "Salicornia herbacea: Botanical, chemical and pharmacological review of halophyte marsh plant", JOURNAL OF MEDICINAL PLANTS RESEARCH, 28 July 2009 (2009-07-28), pages 548 - 555, XP055622242, Retrieved from the Internet <URL:http://www.academicjournals.org/app/webroot/article/article1380370729_Rhee%20et%20al.pdf> [retrieved on 20190913]
- HANEN FALLEH ET AL: "Antioxidant activity and phenolic composition of the medicinal and edible halophyte Mesembryanthemum edule L.", INDUSTRIAL CROPS AND PRODUCTS., vol. 34, no. 1, 1 July 2011 (2011-07-01), NL, pages 1066 - 1071, XP055622235, ISSN: 0926-6690, DOI: 10.1016/j.indcrop.2011.03.018
- RIADH KSOURI ET AL: "Medicinal halophytes: potent source of health promoting biomolecules with medical, nutraceutical and food applications", CRC CRITICAL REVIEWS IN BIOTECHNOLOGY, CRC PRESS, BOCA RATON, FL, US, vol. 32, no. 4, 1 December 2012 (2012-12-01), pages 289 - 326, XP009181721, ISSN: 0738-8551, [retrieved on 20111130], DOI: 10.3109/07388551.2011.630647
- J F PATIENCE ET AL: "Evaluation of two mycotoxin mitigation strategies in grow-finish swine diets containing corn dried distillers grains with solubles naturally contaminated with deoxynivalenol 1 INTRODUCTION", AMERICAN SOCIETY OF ANIMAL SCIENCE J. ANIM. SCI, 1 January 2014 (2014-01-01), pages 620 - 626, XP055622238, Retrieved from the Internet <URL:https://pdfs.semanticscholar.org/a92f/534cfd9052a8ea025a4c9370067d7f7462c4.pdf> DOI: 10.2527/jas2013-6238
- E.O. DA SILVA ET AL: "Mycotoxins and oxidative stress: where are we?", WORLD MYCOTOXIN JOURNAL, vol. 11, no. 1, 23 February 2018 (2018-02-23), Netherlands, pages 113 - 134, XP055622240, ISSN: 1875-0710, DOI: 10.3920/WMJ2017.2267
- NURUL AZMAN ET AL: "The Effect of Convolvulus arvensis Dried Extract as a Potential Antioxidant in Food Models", ANTIOXIDANTS, vol. 4, no. 1, 10 March 2015 (2015-03-10), pages 170 - 184, XP055525250, DOI: 10.3390/antiox4010170
- AZIZA A. EL-NEKEETY ET AL: "Quercetin inhibits the cytotoxicity and oxidative stress in liver of rats fed aflatoxin-contaminated diet", TOXICOLOGY REPORTS, vol. 1, 1 January 2014 (2014-01-01), pages 319 - 329, XP055525271, ISSN: 2214-7500, DOI: 10.1016/j.toxrep.2014.05.014
- MARKHAM: "Flavonoids Protect Against T-2 Mycotoxins both in vitro and in vivo", JOURNAL OF GENERAL MICROBIOLOGJ, 1 January 1987 (1987-01-01), pages 1589 - 1592, XP055525274, Retrieved from the Internet <URL:http://mic.microbiologyresearch.org/deliver/fulltext/micro/133/6/mic-133-6-1589.pdf?itemId=/content/journal/micro/10.1099/00221287-133-6-1589&mimeType=pdf&isFastTrackArticle=> [retrieved on 20181120]
- LE THANH BICH VAN ET AL: "The potential effects of antioxidant feed additives in mitigating the adverse effects of corn naturally contaminated withFusariummycotoxins on antioxidant systems in the intestinal mucosa, plasma, and liver in weaned pigs", MYCOTOXIN RESEARCH, SPRINGER BERLIN HEIDELBERG, BERLIN/HEIDELBERG, vol. 32, no. 2, 29 March 2016 (2016-03-29), pages 99 - 116, XP035961281, ISSN: 0178-7888, [retrieved on 20160329], DOI: 10.1007/S12550-016-0245-Y
- MARIUM TARIQ ET AL: "Encapsulation of halophytic plant parts powder in suppression of root rot diseases", ARCHIV FUER PHYTOPATHOLOGIE UND PFLANZENSCHUTZ, vol. 46, no. 1, 1 January 2013 (2013-01-01), GB, pages 39 - 45, XP055525279, ISSN: 0323-5408, DOI: 10.1080/03235408.2012.734712
- M A IVAN ET AL: "Bulletin of the Transilvania University of Brasov Series II: Forestry @BULLET Wood Industry @BULLET Agricultural Food Engineering STUDY OF POLYPHENOLS AND FLAVONOIDS CONTENTS OF SOME HALOPHYTES SPECIES COLLECTED FROM DOBROGEA REGION", @BULLET, 1 January 2013 (2013-01-01), pages 2 - 2013, XP055525280, Retrieved from the Internet <URL:http://webbut.unitbv.ro/BU2013/Series%20II/BULETIN%20II/18_Ivan.pdf> [retrieved on 20181120]
- MEOT-DUROS ET AL: "Radical scavenging, antioxidant and antimicrobial activities of halophytic species", JOURNAL OF ETHNOPHARMACOLOGY, ELSEVIER IRELAND LTD, IE, vol. 116, no. 2, 22 November 2007 (2007-11-22), pages 258 - 262, XP022486274, ISSN: 0378-8741, DOI: 10.1016/J.JEP.2007.11.024
- DATABASE GNPD [online] MINTEL; 12 April 2005 (2005-04-12), ANONYMOUS: "Dog Biscuits", XP055525238, retrieved from www.gnpd.com Database accession no. 10215053
- DATABASE GNPD [online] MINTEL; 13 December 2016 (2016-12-13), ANONYMOUS: "Natural Blood Purifier", XP055525241, retrieved from www.gnpd.com Database accession no. 4479555
- ANDREI MOCAN ET AL: "PHYTOCHEMICAL INVESTIGATIONS ON FOUR GALIUM SPECIES (RUBIACEAE) FROM ROMANIA", FARMACIA, 1 January 2016 (2016-01-01), XP055525242, Retrieved from the Internet <URL:http://www.revistafarmacia.ro/201601/art-15-Mocan_95-99.pdf>

## Description

La présente invention est du domaine des compléments alimentaires, et concerne un complément destiné à l'alimentation porcine ou bovine, pour la prévention et le traitement des effets délétères liés aux mycotoxines par la mise en œuvre d'au moins un extrait de plante dite « halophyte ».

L'invention est définie par les revendications 1-6 annexées. Tout objet de la description non couvert par les revendications est donné à titre d'exemple et ne fait pas partie de l'invention.

Les céréales et les produits issus de leur transformation représentent la ressource alimentaire humaine et animale la plus importante au monde. Ces matrices sont néanmoins susceptibles d'être contaminées par des microorganismes, parmi lesquels certaines espèces de champignons peuvent se révéler toxinogènes, c'est-à-dire capables de produire des mycotoxines. La contamination en mycotoxines est une problématique mondiale. La FAO (Food and Agriculture Organisation) estime qu'environ un quart des récoltes de la planète est susceptible d'être contaminé par les mycotoxines, soit environ 1000 millions de tonnes/an. Cela implique des pertes économiques et un risque sanitaire potentiel. L'impact des mycotoxines sur l'industrie alimentaire et l'élevage est estimé à un coût annuel d'environ 5 milliards de dollars pour les Etats-Unis et le Canada par exemple. En Europe, la perte économique potentielle est évaluée entre 800 et 1000 millions d'euros par la contamination de céréales en ochratoxine A.

Une grande partie des volumes de blé collectés en France contiennent des teneurs en mycotoxines appartenant à la catégorie des fusariotoxines, c'est-à-dire produites par le des champignons du genre *Fusarium,* supérieures aux limites réglementaires. La contamination des produits peut se faire à différentes étapes de la production du blé. Elle peut se produire au champ et/ou se poursuit au cours des processus de récolte, de séchage ou lors du stockage. Sous des climats où les chaleurs excessives ne durent que très peu de temps, et avec une humidité relative élevée, le genre *Fusarium* est le champignon mycotoxinogène le plus abondant au champ en Europe.

La filière de production animale, notamment porcine, est particulièrement sensible au risque représenté par les fusariotoxines. La consommation par les animaux de produits contaminés peut avoir des conséquences lourdes, à la fois sur le plan sanitaire et économique, se traduisant par une diminution des performances anatomiques, physiologiques, en termes d'hygiène des élevages et qui entraînent une perte de rentabilité. Parmi les mycotoxines produites par *Fusarium,* le déoxynivalénol (DON) et la zéaralénone (ZEA) sont importants parce qu'ils se développent au champ avant la récolte, mais aussi après la récolte lors du stockage. Ainsi leur présence ne peut pas être complètement évitée. Les grains de blé, de triticale et de maïs sont spécialement vulnérables à l'infection par *Fusarium* et sont fréquemment contaminés par DON et ZEA, souvent en proportions plus élevées que les autres céréales. Les animaux monogastriques d'élevage, volailles et porcs en tête, sont très exposés à ce type de mycotoxines du fait de l'importance de la part des céréales dans leur alimentation. De plus, l'absence d'organe de mastication contenant des microorganismes capables de détoxifier les toxines avant leur absorption intestinale, est un facteur aggravant, comme cela est souligné dans le rapport de l'AFSSA (agence française de sécurité sanitaire) sur les mycotoxines publiées en 2009. Une altération des performances chez le poulet en croissance est connue lors d'exposition à de faibles doses de fusariotoxines. Chez le porc, espèce considérée comme la plus sensible, une diminution de la croissance pondérale, des vomissements, des diarrhées, des symptômes neurologiques, des lésions dermatologiques et une réduction de la réponse vaccinale ont été directement corrélée à la présence de DON dans leur alimentation.

Différentes méthodes de prévention au champ sont connues pour réduire le risque de mycotoxines dans les céréales. Ces méthodes consistent à limiter le développement et la prolifération des fusariotoxines par rotation des cultures, enfouissement des résidus de culture, labour, diminution de la densité du semis. Bien que ces stratégies préventives soient souvent appliquées, il demeure difficile d'éviter complètement la contamination dans les champs, car le climat reste le facteur déterminant de cette contamination. Il faut donc avoir recours à des méthodes de détoxification. De nombreuses méthodes physiques et chimiques ont été développées pour la destruction des mycotoxines, telles les aflatoxines, dans les aliments. Néanmoins, seules quelques-unes, comme un traitement à l'ammoniaque ou encore l'irradiation aux rayons gamma, ont été acceptées pour une utilisation pratique. En outre, la plupart de ces traitements sont inefficaces sur les fusariotoxines, et inabordables pour les éleveurs.

Des produits dits antimycotoxiniques, comme des additifs probiotiques, ont été développés et montrent une efficacité contre les mycotoxines selon l'article de Biernasiak et al., 2006, Detoxification of mycotoxins by probiotic preparation for broiler chickens. Mycotoxin Research 22(4): 230-235*.* Toutefois, ces différents additifs ont souvent montré une capacité limitée à lutter contre les effets néfastes des mycotoxines, notamment de DON. La demande WO201386548 décrit l'emploi de composés intégrant du sélénium, voire des sels de sélénium, dans une alimentation céréalière pour lutter contre la mycotoxine ZEA ou d'autres telles que la mycotoxine DON ou la toxine T2. Cependant, seuls des tests expérimentaux utilisant une adjonction de sulfite dans le complément alimentaire tendent à montrer une efficacité à l'égard de DON.

Le document XP055622232 (Lemay, 2017, "Impact d'une ration contaminée par des mycotoxines de Fusarium sur la réponse immunitaire systémique et mucosale et la possible capacité de compléments antioxydants à rétablir le statut immunitaire de porcelets sevrés") divulgue qu'un aliment comprenant de la quercétine (d'un extrait d'oignon) administré à des porcs ayant reçu un aliment contaminé par des mycotoxines (DON et ZEA) permet de restaurer le statut immunitaire desdits porcs.

Les plantes halophytes sont des plantes littorales connues pour leur grande diversité biologique et chimique, et leurs activités biologiques importantes (Ksouri et al., 2012). L'invention vise en particulier à identifier et/ou produire des extraits d'halophytes en vue de valoriser ces extraits en alimentation animale.

Pour remédier en tout ou partie aux inconvénients de l'art antérieur, la présente invention concerne un extrait d'une plante halophyte pour son utilisation dans le traitement ou la prévention d'une mycotoxicose induite par l'une des mycotoxines déoxynivalénol DON, zéaralènone ZEA et T2 produites par Fusarium, et dans laquelle ledit extrait se présente dans un complément alimentaire bovin ou porcin et :
- est un extrait hydroalcoolique d'un organe de plante appartenant aux genres Convolvulus , Galium, et Eryngium, et
- est issu d'un surnageant dudit extrait hydroalcoolique ayant été centrifugé, filtré et évaporé jusqu'à l'obtention d'un extrait sec.

Les inventeurs ont montré de manière tout à fait inattendue le pouvoir protecteur des ingrédients des extraits contre une alimentation contaminée en mycotoxines, et en particulier les mycotoxines DON, ZEA et la toxine T2.

Les inventeurs ont démontré que les extraits disposent d'un pouvoir cytoprotecteur intéressant. Le traitement de cellules rénales bovines (MDBK) et intestinales porcines (IPEC-J2) avec les extraits a permis de réduire significativement la toxicité des fusariotoxines (toxine T2 et zéaralénone (ZEA)), en restaurant la viabilité cellulaire. Ces résultats présentés dans la suite de la présente description mettent en évidence le rôle antimycotoxinique des halophytes.

Les inventeurs ont réalisé l'évaluation de l'activité antioxydante des extraits selon le test de piégeage du radical DPPH qui a permis de démontrer leur grande activité antiradicalaire et un forte capacité antioxydante selon le test dit « CAT » (CAT étant l'acronyme pour : « capacité antioxydante totale »). En outre, le fractionnement bioguidé des extraits suggère l'implication de molécules hautement antioxydantes dans l'activité protectrice, au vu de la présence majoritaire de composés tels que des composés phénoliques dans les fractions actives qui sont décrites ci-après dans la présente description.

L'extrait de plante halophyte est un extrait d'un organe aérien de la plante. Un organe aérien correspond aux parties de la plante autres que les racines, par exemple les feuilles, les fleurs ou les tiges. Les plantes ont été rincées à l'eau distillée, congelées, lyophilisées, broyées et conservées sous forme de poudre en vue de l'étape d'extraction.

Les différentes plantes halophytes testées proviennent de différentes zones du littoral breton. Les extraits de plantes ont tous montré une activité, ces extraits font avantageusement partie du genre *Convolvulus, Galium, Frankenia, Matthiola, Frankenia, Dianthus, Limonium, Eryngium, Helichrysum, Ononis, Plantago, Spergularia,* et *Suaeda,* définis selon la classification phylogénétique APG III. Ces extraits peuvent être utilisés seuls ou en combinaison dans le complément alimentaire.

Les extraits de plantes sont sélectionnés parmi *Convolvulus soldanella (Cs), Galium arenarium (Ga), Galium verum (Gv), Eryngium campestre* (Ec). L'extrait de plante halophyte est avantageusement choisi parmi au moins un extrait de *Convolvulus soldanella (Cs)* et un extrait de *Galium arenarium (Ga),* ces deux espèces ayant montré les meilleures activités antimycotoxiniques.

Sur le modèle de la lignée cellulaire MDBK, l'ensemble des extraits se révèle actif contre la toxine T2 et la ZEA. En revanche, aucun extrait ne présente d'activité notable à l'égard du DON. Les extraits de Ga et de *Cs,* à la dose testée (voir la partie expérimentale à la suite), procurent le pourcentage de viabilité le plus élevé (≈ 75%) en condition d'exposition à la toxine T2. En cas d'exposition à la ZEA, c'est encore l'extrait de Ga qui se distingue avec un pourcentage de viabilité élevé (>77%). En présence de DON, l'extraits de Ga assure le pourcentage de viabilité le plus élevé, même s'il n'est significativement pas différent du témoin « toxicité DON ». Le pourcentage de viabilité obtenu est un pourcentage qui exprime la capacité des extraits à protéger les cellules contre les mycotoxines. Un pourcentage de viabilité important correspond à un extrait actif. Le témoin toxicité exprime la toxicité de la mycotoxine testée seule sur les cellules sans aucun agent protecteur.

Tous les extraits ont également fait l'objet d'une étude du pouvoir antimycotoxinique sur des cellules IPEC-J2. Une première approche des résultats montre que plusieurs extraits possèdent un pouvoir protecteur notable contre la toxine T2. L'activité la plus élevée est observée chez l'extrait *d'Eryngium campestre (Ec)* qui maintient une viabilité cellulaire de 97,6%, contre 52,1% pour le témoin toxicité de la toxine T2.

L'extrait de plante halophyte comprend avantageusement au moins une molécule sélectionnée parmi un iridoïde, un flavonoïde de préférence un flavonol, et un polyphénol. L'iridoïde est avantageusement de l'aspéruloside. Le flavonoïde est avantageusement de la quercétine, ou un de ses dérivés, ou de la myricétine, ou un de leurs dérivés. L'extrait de plante halophyte utilisé dans le cadre de l'invention comprend, de préférence, au moins un ingrédient sélectionné parmi de l'aspéruloside, de la quercétine, de l'acide chlorogénique et un dérivé de la quercétine ou de la myricétine, un dérivé de la myricétine et de l'acide chlorogénique.

Le polyphénol est avantageusement de l'acide chlorogénique ou un de ses dérivés. Le dérivé de la quercétine susvisé est choisi avantageusement parmi la quercétine-3-O-rutinoside, la quercétine-3-O-glucoside et la quercétine-3-O-glucose-6"-acetate.

Dans le cadre de l'invention, les noms des molécules citées précédemment correspondent aux formules des composés présentés ci-dessous :
- L'acide chlorogénique : 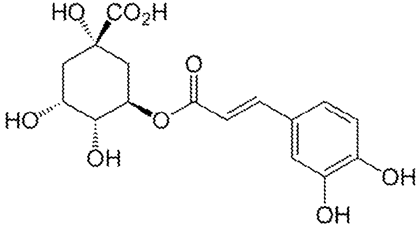
- L'aspéruloside : 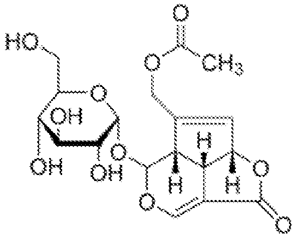
- la quercétine : 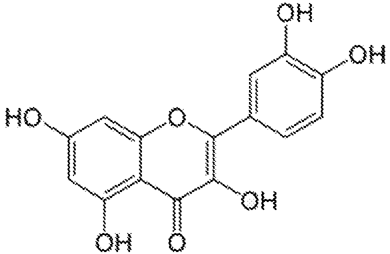
- la myricétine : 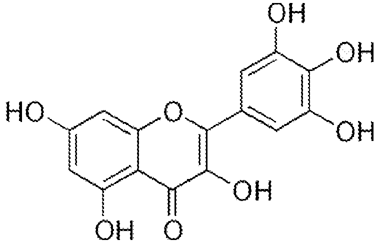
- la quercétine-3-O-rutinoside : 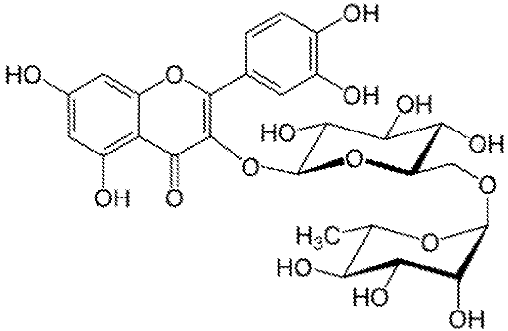
- quercétine-3-O-glucoside : 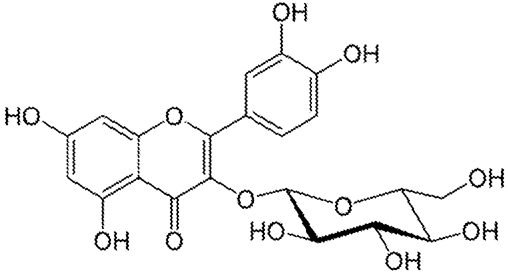
- la quercétine-3-O-glucose-6"-acetate : 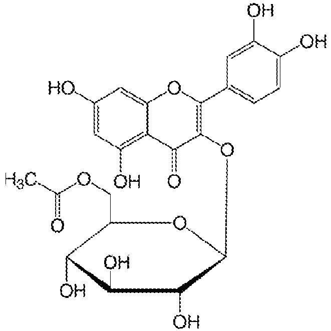
- un iridoïde au sens de la présente invention se définit selon l'acception la plus courante : il s'agit d'une molécule comportant un squelette iridane :

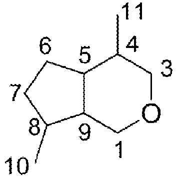

### PARTIE EXPERIMENTALE :

### PARTIE 1

### I. Plantes halophytes testées

Les différentes plantes halophytes testées, appartenant à différentes familles d'Angiospermes, proviennent du littoral breton. Il s'agit de *Suaeda vera* (Amaranthacées), *Eryngium campestre* (Apiacées), *Helichrysum stoechas* (Astéracées), *Matthiola sinuata* (Brassicacées), *Dianthus arenarius* et *Spergularia marina* (Caryophyllacées), *Convolvulus* (ex *Calystegia) soldanella* (Convolvulacées), *Ononis repens* (Fabacées), *Frankenia laevis* (Frankeniacées), *Plantago lanceolata* (Plantaginacées), *Limonium vulgare* (Plombaginacées), *Galium arenarium* et *Galium verum* (Rubiacées).

### II. Cellules animales et culture

Deux lignées cellulaires ont été sélectionnées pour cette étude: la lignée cellulaire MDBK (Maldin Dardy Bovine Kidney) composée de cellules de rein de bœuf adulte, et la lignée IPEC-J2 composée de cellules épithéliales intestinales de porc. Ces cellules ont été maintenues dans une atmosphère saturée en eau, à 5% de CO₂ et à 37°C. Le milieu de culture complet est l'EMEM (Eagle's Minimum Essential Medium, Sigma Aldrich^{®}) contenant 4,5 g/L de glucose essentiel à la croissance cellulaire. Ce milieu est additionné de 1 0% de sérum fœtal de cheval (HSF, Sigma Aldrich^{®}) apportant des facteurs nécessaires à la division cellulaire.

### III. Mycotoxines

Plusieurs mycotoxines sont testées. Le déoxynivalénol = DON (MM = 296,35 g/mol, pureté ≥ 98%, Sigma Aldrich^{®}, St Louis, USA), produit par *Fusarium sp.,* la toxine T2 (MM = 466,5 g/mol, pureté ≥ 98%, Sigma Aldrich^{®}, St Louis, USA), dont l'origine n'est pas spécifiée, et la zéaralénone = ZEA (MM= 320,38 g/mol, pureté ≥ 98%, Sigma Aldrich^{®}, St Louis, USA). Les solutions de mycotoxines ont été préparées dans le diméthyl sulfoxyde (DMSO).

### IV. Préparation des extraits d'halophytes

Les parties aériennes des plantes prélevées sont congelées, puis séchées par lyophilisation et enfin réduites en poudre.

Les poudres de chaque plante sont soumises à une extraction avec une solution éthanol/eau 50:50 (v/v), à raison de 100 mL de solvant pour 1 g de biomasse sèche. Le mélange est laissé pendant 20 mn sous agitation magnétique, à la température ambiante. L'extraction est répétée trois fois pour chaque plante. Après chaque extraction, le mélange est centrifugé à 4000 rpm et à 4°C (Centrifugeuse Jouan^{™} CR 4-22). Le surnageant est prélevé puis filtré sur du papier filtre Whatman^{®}. Les trois filtrats recueillis pour une même plante sont rassemblés puis évaporés sous-vide à 40°C grâce à un évaporateur rotatif pour obtenir des extraits secs.

### V. Traitements

Le traitement des cellules animales à l'aide des extraits d'halophytes et/ou des mycotoxines est réalisé comme suit :
Jour 0: Dépôt dans les puits de 5.10⁴ cellules/100 µL
J1: Ajout de 100 µL de milieu + extraits à 0,01 µg/mL (1%)
J2: Ajout des mycotoxines: DON 2.10⁻⁵ M (2%) ou ZEA 10⁻⁴ M (2%) ou toxine T2 10⁻⁴ M (1%)
J4: Réalisation des analyses (cytotoxicité, etc...)

### VI. Protocoles mis en œuvre pour l'évaluation de l'activité antioxydante des extraits

### 1.1. Test CAT (Capacité antioxydante totale)

La capacité antioxydante totale des extraits a été évaluée selon la méthode de Prieto et al., 1999, Analytical Biochemistry 269(2): 337-41*.* Cette technique est basée sur la réduction du molybdène Mo (VI) en molybdène Mo (V) en présence d'agents antioxydants pour former un complexe vert de phosphate/Mo(V) à pH acide. Un volume de 0,1 mL de chaque extrait a été mélangé à 1 mL du réactif (0,6 M d'acide sulfurique, 28 mM de phosphate de sodium et 4 mM de molybdate d'ammonium). Le mélange est incubé à 95°C pendant 90 min. Après refroidissement, l'absorbance du mélange est mesurée à 695 nm contre le blanc qui contient de l'éthanol à la place de l'extrait (Beckman Coulter DTX 880). La capacité antioxydante totale est exprimée en mg d'équivalent acide ascorbique par gramme d'extrait sec (mg EAA/g MS).

### 1.2. Test DPPH

En présence d'un antioxydant, le radical DPPH de couleur violette est réduit en un composé jaune, dont l'intensité de la couleur est inversement proportionnelle à la capacité de l'antioxydant à donner des protons (Sanchez-Moreno, 2002, Food Science and Technology International 8(3): 121-137*).* La mesure de l'activité de piégeage du radical DPPH par les extraits a été effectuée selon la méthode de Brand-Williams et al., 1995, Food Science and Technology, .vol. 28, Issue 1 :25-30*.* Cette méthode a été miniaturisée afin d'être appliquée en microplaques. Brièvement, 100 µL d'extrait dilué sont ajoutés à 100 µL de DPPH (100 µM) préalablement préparé dans le méthanol 90%. Le mélange est ensuite incubé à température ambiante et à l'abri de la lumière pendant 30 minutes. L'absorbance est lue à 517 nm contre un « blanc » qui ne contient que le solvant d'extraction ou de fractionnement (Beckman Coulter DTX 880). Le test a été réalisé en triplicata avec différentes concentrations d'extrait. Le pourcentage d'inhibition du radical DPPH est calculé selon l'équation suivante : Pourcentage d'inhibition du DPPH (%) = (1 - (DO essai / DO blanc)) x 100 (où DO essai correspond à l'absorbance de la solution avec l'extrait et DO blanc correspond à l'absorbance de solution avec le solvant). L'activité antiradicalaire d'un extrait est exprimée en µg/mL par la CI₅₀ (concentration de l'extrait requise pour inhiber 50% du radical DPPH). Les valeurs de CI₅₀ les plus basses correspondent à une plus forte activité antiradicalaire.

### 1.3 Exploitation des données

Les données ont été analysées à l'aide du logiciel de traitement statistique R. Après avoir vérifié la normalité de distribution de la variable (test de Shapiro-Wilk) et l'homoscédasticité des variances (test de Bartlett), une analyse de la variance (« ANOVA » en anglais) à un facteur a été réalisée. Une différence significative entre les traitements (P <0,05) a été déterminée par un test de Tukey. Dans le cas où la normalité de la distribution et l'homoscédasticité des variances ne sont pas vérifiées, un test non-paramétrique de Kruskal-Wallis a été appliqué. Les lettres des graphiques correspondent aux résultats des analyses statistiques, où une même lettre signifie qu'il n'y a pas de différence significative au seuil 5% d'erreur.

### VII. Protocoles mis en œuvre pour l'évaluation de la toxicité cellulaire et de l'inflammation

### VII. a Protocoles mis en œuvre pour l'évaluation de la toxicité cellulaire

### 1.1 Test de cytotoxicité

Le test de cytotoxicité est une méthode rapide afin de quantifier par colorimétrie le pourcentage de cellules vivantes sur une plaque de 96 puits. Il repose sur un test colorimétrique basé sur l'activité métabolique des cellules viables. En effet, on utilise un réactif, le sel de tétrazolium appelé résazurine ou MTS (Promega^{®}, Madison, USA), qui est réduit par le métabolisme mitochondrial des cellules en un produit coloré : la résorufine (marron). Ce composé absorbe à 490 nm (spectrophotomètre Thermo Fisher Scientific) et l'absorbance est proportionnelle au nombre de cellules viables. Les résultats seront exprimés en pourcentage de viabilité. 100% de prolifération correspond au témoin eau. La non cytotoxicité des extraits a d'abord été évaluée, puis les extraits ont été incubés en présence des cellules 24 heures avant l'addition des mycotoxines.

### 1.2 Détection des modifications membranaires

L'intégrité cellulaire a été évaluée sur des cellules MDBK, cultivées sur un filtre de porosité 0,4 µm, dans des plaques à 12 puits. Ces cellules ont été ensemencées à 1x10⁵ cellules/puits afin de constituer une monocouche cellulaire stable. De plus, 700 µL de milieu de culture et 200 µL de cellules sont ajoutés dans les puits. Les cellules sont alors traitées avec les différentes toxines à concentration non cytotoxique, en triplicat.

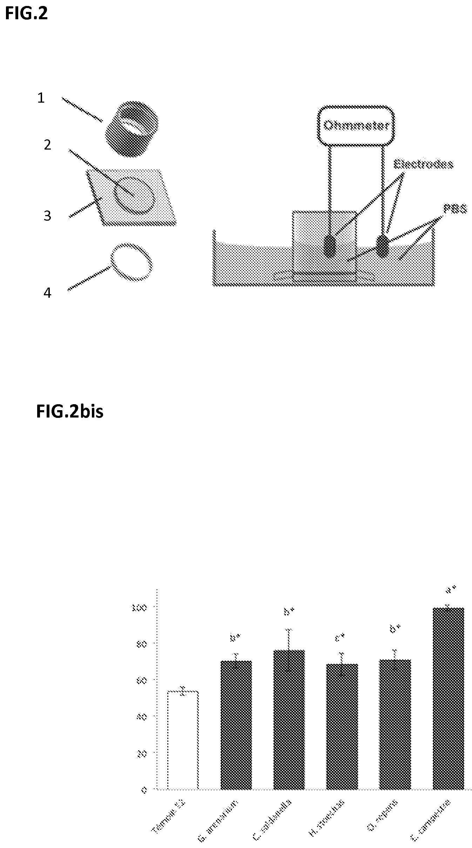

L'effet des toxines+extraits sélectionnés sur l'intégrité de la barrière à des concentrations non cytotoxiques a été déterminé en mesurant la résistance électrique trans-épithéliale (TEER) en utilisant un système Vol-Ohm-mètre Millicell (Millipore, Saint-Quentin en Yvelines, France) comprenant un cylindre 1 placé au-dessus d'un milieu de culture 2 - lui-même déposé sur une membrane 3 de 0.2 µm - et fermé par un bouchon 4 (voir la figure 2). L'intégrité des jonctions serrées est alors évaluée à deux et sept jours en mesurant la résistance électrique. Les valeurs de TEER sont déterminées en mesurant la différence de potentiel entre les deux côtés de la monocouche cellulaire, exprimées en ohms.cm².

### VII. b Protocoles mis en œuvre pour l'évaluation de l'inflammation

Une approche de protéomique ciblée a été utilisée pour analyser l'activité anti-inflammatoire des extraits végétaux par l'expression de protéines de l'inflammation (cytokines, interleukines) sur les deux types cellulaires. Deux marqueurs d'inflammation ont été choisis pour les cellules bovines (TNF-alpha et interleukine-1 beta) et pour les cellules porcines (TNF-alpha et interleukine-8).

### 1.1 Etude de la sécrétion de TNF-alpha et IL-8 par les cellules porcines IPEC-J2

Les surnageants de culture des cellules IPEC-J2, après 48 h d'exposition en présence des extraits et des toxines, sont récupérés et analysés.

Les dosages de TNF-alpha et d'IL-8 sont réalisés à l'aide d'un kit ELISA (Promocell, Allemagne). L'analyse se fait par colorimétrie.

### 1.2 Etude de l'expression de molécules inflammatoires sur les cellules MDBK

Les cellules IPEC-J2 et MDBK ont été soumises à deux types de traitements différents : (i) exposition aux mycotoxines seules pendant 48 h, (ii) pré-incubation avec les extraits végétaux pendant 24 h puis exposition aux mycotoxines pendant 48 h. L'expression de TNF-alpha et de IL1-beta a ensuite été mesurée par Western Blot. Après traitement des cellules, l'extraction des protéines sur les culots cellulaires est réalisée à partir d'une solution de lyse contenant 50 mM Tris (CAS 77-86-1) (pH 7,4), 250 mM NaCl, 5 mM EDTA, 50 mM NaF, 1 mM Na₃VO₄, 1% Nonidet P-40 (NP-40) (CAS 9016-45-9) et 0,02% NaN₃, à laquelle il faut ajouter 17 µL de PMSF (CAS 329-98-6)(Sigma Aldrich^{®}) 0,3 M et de l'anti-protéase EDTA free (Roche Diagnostic GmbH^{™}). Les lysats sont centrifugés et les surnageants sont conservés à -80°C.

Le dosage des protéines totales est réalisé selon la méthode de Lowry, à l'aide du kit de la société Biorad^{®} sous la référence « DC Protein Assay ».

Vingt microgrammes de protéines totales sont déposés sur un gel de polyacrylamide en conditions dénaturantes (SDS-PAGE) et transférées sur membrane de nitrocellulose. Une fois le transfert terminé, chaque membrane est placée dans une solution de saturation et laissée à incuber pendant 1 heure à température ambiante, sous agitation. Enfin on incube les membranes avec 25 mL de solution d'anticorps primaire pendant une nuit à 4°C, sous agitation. Après trois bains de lavage, on laisse incuber chaque membrane dans 25 mL de solution d'anticorps secondaire.

La révélation des membranes est réalisée à l'aide d'un scanner de membrane de Western Blot de référence commerciale G-Box Chemi XT4^{™}, commercialisé par la société Syngene^{™}. Pour mettre en évidence la protéine choisie, on utilise un kit vendu sous la référence « ECL » par la société GE HealthCare^{®}. L'analyse des scans obtenus est réalisée à l'aide du logiciel GeneTools^{™} édité par la société Syngene^{™}.

### VIII. Résultats obtenus pour l'évaluation de l'activité antioxydante des extraits

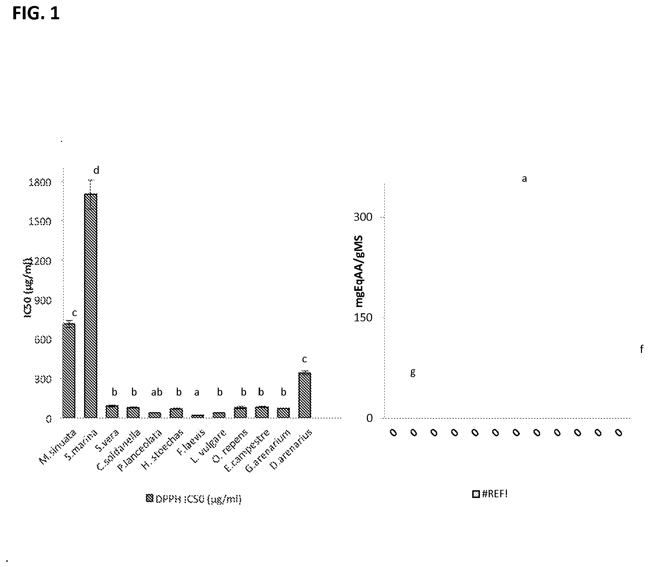

L'activité antioxydante des extraits a été évaluée à l'aide des tests DPPH et CAT. L'examen de la capacité de piégeage du radical DPPH révèle que tous les extraits ont un pouvoir antiradicalaire assez élevé (CI₅₀ faible <100 µg/mL), à l'exception de *Spergularia marina (Sm),* de *Matthiola sinuata (Ms)* et *Dianthus arenarius (Da)* (figure 1). L'extrait de *Frankenia laevis* (*FI*) présente l'activité antiradicalaire la plus élevée (CI₅₀=18 µg/mL), suivi de celui de *Plantago lanceolata* (*PI*).

Les résultats obtenus avec le test CAT confirment globalement ceux de l'activité anti-DPPH. Ainsi, l'extrait *FI* possède la capacité antioxydante totale la plus élevée (316 mg EAA/g MS), suivi de celui de Ga (252 mg EAA/g MS). Comme précédemment, le test CAT ne révèle pas d'activité notable pour les extraits de *Sm,* Da et Ms. Toutefois, les résultats obtenus avec les deux tests diffèrent pour certains extraits. C'est le cas de Cs et *Limonium vulgare (Lv),* qui présentent des activités antiradicalaires très fortes mais qui ont une capacité antioxydante parmi les moins élevées.

### IX. Résultats obtenus sur la toxicité cellulaire

Le pourcentage de viabilité obtenu est un pourcentage qui exprime la capacité des extraits à protéger les cellules contre les mycotoxines. Un pourcentage de viabilité important correspond à un extrait actif. Le témoin toxicité exprime la toxicité de la mycotoxine testée seule sur les cellules sans aucun agent protecteur.

Sur le modèle de la lignée MDBK, l'ensemble des extraits d'halophytes testés se révèle actif contre la toxine T2 et la ZEA. En revanche, aucun extrait ne présente d'activité notable vis-à-vis du DON. L'extrait de Ga procure le pourcentage de viabilité le plus élevé en condition d'exposition à la toxine T2 (74,4%), suivi de l'extrait de *Cs.* En cas d'exposition à la ZEA, c'est encore l'extrait de Ga qui permet le pourcentage de viabilité le plus fort (77,2%), suivi *d'Ec, Lv* et *Ononis repens.* En présence de DON, les extraits d'*Helichrysum stoechas* (*Hs*) et de Ga maintiennent les pourcentages de viabilité les plus élevés, respectivement 65% et 63,2%, même s'ils ne sont significativement pas différents du témoin « toxicité DON ».

Ga apparaissant comme l'espèce la plus prometteuse parmi l'ensemble des halophytes testées, la recherche bioguidée des molécules antimycotoxiniques a été réalisée sur l'extrait de cette plante. En outre, nous avons choisi une autre espèce prometteuse, Cs, en raison de son pouvoir protecteur contre la toxine T2, une toxine connue pour son extrême toxicité.

Les résultats obtenus pour les extraits *Cs, Ec, Ga, Hs* et *Or* montrent que tous ces extraits possèdent un pouvoir antimycotoxinique notable contre la toxine T2 ; voir la figure 2 bis qui montre l'activité antimycotoxinique, avec le pourcentage de viabilité cellulaire reporté en ordonnée des extraits testés sur les cellules IPEC-J2, (moyenne±écart-type, n=3 ; *significativement différent du témoin T2). L'activité la plus élevée est observée pour l'extrait d'Ec, qui donne un pourcentage de viabilité de 97,6%, contre 52,1% pour le témoin toxicité de la toxine T2.

### X. Analyse des extraits par spectroscopie de RMN

### X. a Protocole

Les spectres ont été obtenus sur les appareils suivants : un spectromètre Brüker^{®} Advance DRX 400 associé à une sonde de 5 mm dual ¹H/ ¹³C (400,31 MHz pour le ¹H et 100,13 MHz pour ¹³C), et un spectromètre Brüker^{®} Advance DRX 500 associé à une cryosonde inverse triple résonance TBI ¹H/{BB}/ ¹³C avec un gradient Z (500,13 MHz pour ¹H et 125,75 MHz pour ¹³C). Les extraits bruts et les fractions ont d'abord été analysés sur le spectromètre DRX 400, puis la caractérisation des molécules par séquences 2D a été réalisée sur le DRX 500 avec cryosonde.

Après avoir été portés à sec à l'évaporateur rotatif sous vide (40°C), les résidus secs ont été solubilisés dans 650 à 900 µL d'eau lourde (D₂O), de chloroforme deutéré (CDCl₃) ou de méthanol deutéré (MeOD), selon le solvant d'extraction ou d'élution. Puis ils ont été transférés dans des tubes RMN de 5 mm pour être analysés.

L'identification des composés révélés par RMN a été réalisée soit par superposition des spectres de substances témoins ayant subi des analyses de RMN au préalable, soit par l'ajout d'un standard à l'échantillon, soit par l'analyse des spectres des différentes séquences bidimensionnelles réalisées sur les échantillons.

### X. b Analyse RMN sur les extraits

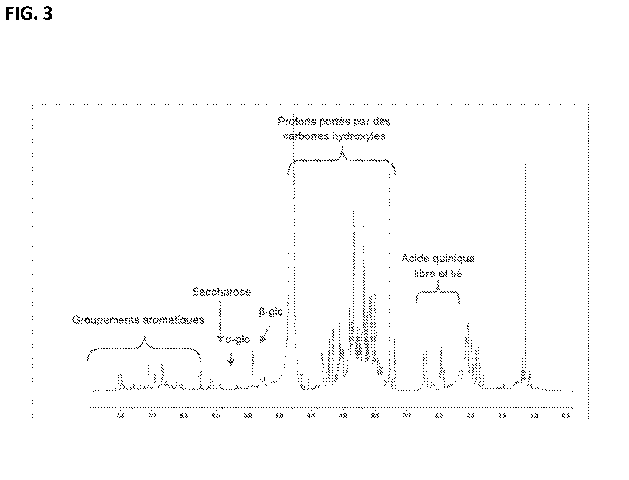

Avant de procéder au fractionnement des extraits bruts actifs, une analyse RMN du proton a été réalisée sur les deux extraits de plantes halophyte Cs et *Ga.* Le spectre de l'extrait brut de Cs (voir la figure 3, spectre du proton extrait brut) présente un grand massif de signaux dans la zone des protons portés par des carbones hydroxylés (3 - 4,5 ppm) correspondant aux protons des oses. Les doublets observables à 4,65 ppm et 5,15 ppm indiquent la présence respective de β-glucose et α-glucose. De même, le saccharose est caractérisé par le doublet à 5,45 ppm. D'autres signaux apparaissent également dans la zone des protons aromatiques. Un multiplet à 2,1 ppm et deux doublets à 6,3 et 7,5 ppm sont visibles sur le spectre, suggérant la présence de l'acide chlorogénique. Enfin, quelques pics sont visibles dans la zone des protons aliphatiques (0-3 ppm).

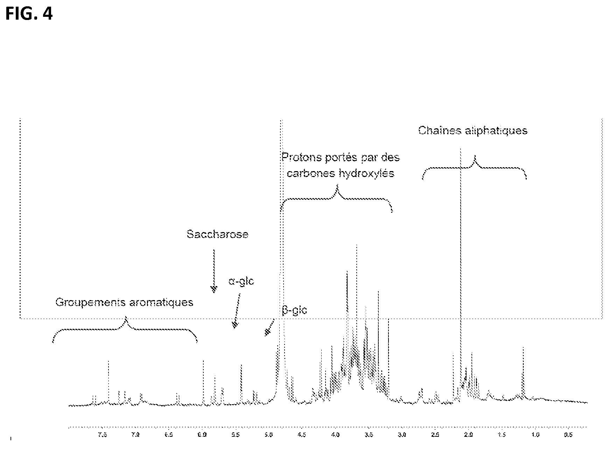

Comme pour l'extrait précédent, l'extrait brut de Ga (voir la figure 4, spectre du proton extrait brut) présente de multiples signaux au niveau de l'enveloppe des sucres (carbones hydroxylés). En dehors de cette zone, plusieurs signaux bien définis sont visibles dans la région des groupements aromatiques, dont certains caractérisent l'acide chlorogénique. Les autres signaux visibles dans cette zone correspondent aux protons du groupement aromatique de l'aspéruloside, un composé précédemment identifié chez d'autres espèces (Plouvier et al., 1964, Comptes Rendus de l'Académie des Sciences de Paris, 258(2): 735).

Le rapprochement des spectres des deux espèces permet de remarquer que certains signaux observés dans la zone des aromatiques sont communs. Le reste des signaux de cette zone indique la présence d'autres groupements aromatiques qui caractérisent chacune des espèces.

Les extraits des deux espèces *Ga et Cs* ont été purifiés et notamment fractionnés par chromatographie d'adsorption sur résine de silice greffée C18, comme détaillé ci-après.

### XI. Purification des molécules d'intérêt à partir des deux extraits Ga et Cs

### XI. 1 Protocoles

### XI. 1.a Fractionnement par chromatographie d'adsorption sur silice C18

Les extraits bruts actifs sont purifiés par fractionnement sur silice greffée C18 (phase inverse), selon le principe de chromatographie d'adsorption en phase liquide. Cette technique permet l'adsorption spécifique des composés de l'extrait végétal sur la phase stationnaire en fonction de leur polarité. Ce fractionnement a été réalisé sur une colonne comprenant de la silice, commercialisée par la société GRACE^{™} sous la référence DAVISIL^{®} (RP-18, 60Å, 35-70µm), à raison de 30 g de silice par gramme d'extrait sec à fractionner. La résine est mise en suspension dans le méthanol puis coulée dans la colonne et conditionnée avec le premier solvant d'élution (eau acidifiée). Après avoir déposé l'extrait, la colonne est rincée avec de l'eau acidifiée (permettant de récupérer une première fraction, dite effluent) puis le gradient d'élution suivant est appliqué : MeOH 20%, MeOH 40%, MeOH 60%, MeOH 80%, MeOH 100%, et enfin EtOH 100%. Le volume de chaque éluant utilisé correspond au double du volume de la phase stationnaire. Les fractions recueillies sont concentrées à l'aide d'un évaporateur rotatif à 40°C, congelées puis lyophilsées pour tester leur activité antimycotoxinique.

### XI. 1.b Purification par CLHP

La présence de plusieurs molécules dans les fractions actives nécessite de réaliser une analyse par HPLC de ces fractions. Compte-tenu de la richesse en composés phénoliques dans les extraits hydro-alcooliques des halophytes, l'analyse par CLHP a été réalisée à l'aide d'une colonne C18 et d'un détecteur à barrette de diodes permettant de détecter les molécules possédant un noyau chromophore. Ces analyses ont été réalisées sur une chaîne CLHP Shimadzu UFLC XR couplée à un détecteur à barrette de diodes Shimadzu SPD-M20A. La colonne utilisée est de type Spherisorb ODS2 (5 µm, 250 x 4,6 mm, Waters). Deux solvants ont été utilisés : A=Acétonitrile et B=Eau. Le volume d'injection est fixé à 50 µL. Les composés sont élués selon le gradient linéaire suivant : t=0 mn 100% B; t=10 mn 100% A ; t=12 mn 100% A puis retour aux conditions initiales en 8 minutes. Le débit est de 1 mL/mn et la longueur d'onde sur le détecteur a été fixée à 254 nm. Après avoir récupéré les composés purifiés, ceux-ci sont concentrés à l'aide d'un évaporateur rotatif à 40°C, congelés et lyophilisés pour enlever les traces d'eau, puis étudiés par RMN pour caractérisation.

### XI. 2 Résultats pour l'extrait Cs

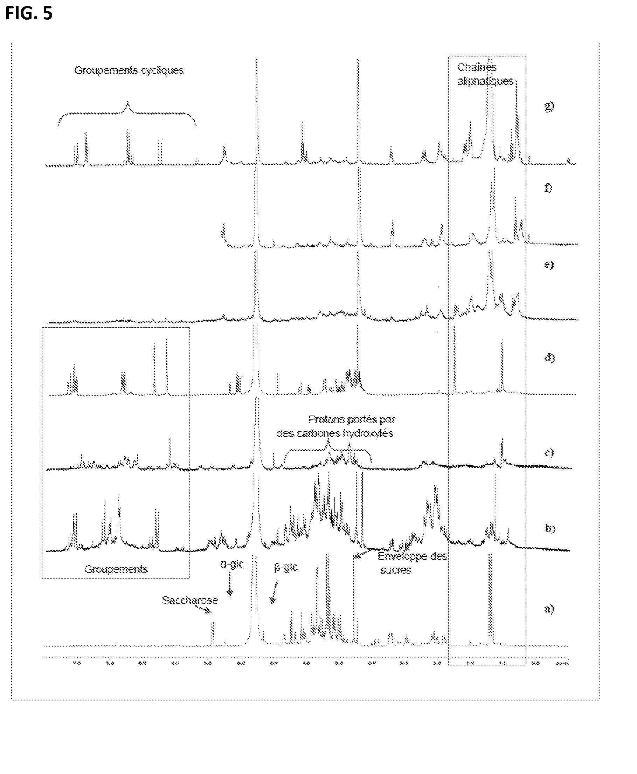

Le fractionnement a permis d'obtenir six fractions distinctes (voir *VII. 1.a)* suivant un degré de polarité décroissant. Les spectres de RMN (spectromètre DRX400) de ces fractions sont présentés sur la figure 5. La première fraction éluée à l'eau (Fig. 5-a, solvant D₂O) présente majoritairement des sucres, et de l'acide quinique.

Le spectre de la fraction MeOH20 (Fig. 5-b, solvant D₂O) comporte des signaux nets dans la zone des protons aromatiques, avec un massif au niveau de la zone des protons portés par des carbones hydroxylés (3-4,5 ppm). Des doublets à 6,3 et 7,6 ppm et deux multiplets à 2,2 et 5,3 ppm sont également visibles, indiquant la présence de l'acide chlorogénique.

La troisième fraction issue de cette purification (MeOH40), de composition complexe, présente sur son spectre une multitude de signaux dans toutes les zones et notamment des motifs variés dans la zone des protons aromatiques (Fig.5-c, solvant D₂O).

Sur le spectre de la fraction MeOH60 (Fig. 5-d, solvant MeOD), plusieurs signaux bien définis sont observables dans la zone des protons aromatiques. Quelques signaux sont également visibles dans la région des oses qui pourraient être engagés dans des liaisons avec les composés précédemment évoqués. Enfin, la présence d'un doublet à 1,1 ppm correspondant *a priori* à un groupement CH₃ suggère un greffage.

Les fractions MeOH80 et MeOH100 (DRX400, solvant MeOD), les moins polaires, ont une composition relativement proche. Elles comportent surtout des signaux dans la zone des protons aliphatiques en plus de quelques signaux minoritaires dans la zone des protons portés par des carbones hydroxylés et un multiplet dans la zone des protons anomériques. Ceci suggère un composé comprenant une longue chaîne aliphatique avec quelques insaturations et des carbones hydroxylés.

La dernière fraction (EtOH100) (DRX400, MeOD) présente des protons dans la zone des groupements aromatiques et de multiples signaux à l'extérieur de cette zone, suggérant la présence d'alcools gras à longue chaîne probablement greffés sur les groupements aromatiques (Fig. 5-g).

### XII. Résultats obtenus pour l'évaluation de l'activité antioxydante des fractions des extraits de Cs et Ga

Les protocoles mis en œuvre sont ceux décrits au point Il de la présente partie expérimentale.

### XII. 1 .1 Résultats pour l'extrait Cs

Les fractions MeOH60, MeOH40 et MeOH20 se révèlent les plus actives pour le piégeage du radical DPPH, avec des CI₅₀ respectivement de 13,8, 18,1 et 20,9 µg/mL (Tableau 1). Les fractions MeOH100 et EtOH100 présentent, elles, les plus faibles capacités antiradicalaires (CI₅₀ élevée). Par ailleurs, l'activité antiradicalaire de l'extrait brut (ExB) est plus faible que celle des fractions MeOH20, 40, 60 et 80.

**Tableau 1. Activité antioxydante des différentes fractions de Cs (Les données entre parenthèses correspondent aux écarts-types) :**

| **Fractions** | **DPPH (µg/mL)** | **CAT (mg EAA/gMS)** |
|---|---|---|
| MeOH20 | 20,9 (±1,9) a | 175,5 (±13,7) a |
| MeOH40 | 18,1 (±0,5) a | 179,3 (±13,8) a |
| MeOH60 | 13,8 (±0,5) a | 200,1 (±9,7) a |
| MeOH80 | 45,8 (±1,5) b | 133,9 (±17,7) b |
| MeOH100 | 1000 (±0) d | 17,2 (±6,9) d |
| EtOH100 | 969,1 (±25) c | 85,7 (±19,9) c |
| ExB | 77,5 (±6,0) | 89,1 (±1,4) |

Pour ce qui concerne la capacité antioxydante totale, les fractions MeOH20 à MeOH80 présentent une capacité antioxydante plus forte que l'extrait brut. La fraction MeOH100 en est quasiment dépourvue.

### XII. 1 .2 Résultats pour l'extrait Ga

Dans les mêmes conditions que pour les factions obtenues de l'extrait Cs, les fractions de Ga ont été évaluées pour leur activité antioxydante. Les fractions MeOH60 et MeOH20 possèdent l'activité anti-radicalaire la plus élevée avec des CI₅₀ respectivement de 13,7 et 16,8 µg/mL (Tab. 2), tandis que les fractions EtOH100 et MeOH100 sont pratiquement inactives. Là encore, l'activité anti-radicalaire des fractions MeOH20, 40, 60 et 80 sont plus fortes que celle de l'extrait brut (ExB).

**Tableau 2. Activité antioxydante des différentes fractions de Ga (Les données entre parenthèses correspondent aux écarts-types) :**

| **Fractions** | **DPPH (µg/mL)** | **CAT (mg EAA/gMS)** |
|---|---|---|
| MeOH20 | 16,8 (±2,4) a | 304,7 (±11,4) a |
| MeOH40 | 34,3 (±1,4) a | 413,9 (±44,1) a |
| MeOH60 | 13,7 (±1,8) a | 308,2 (±2,7) a |
| MeOH80 | 39,8 (±6,1) b | 315,5 (±10,1) b |
| MeOH100 | 511 (±12,9) c | 38,4 (±6,2) d |
| EtOH100 | 1000 (±0) d | 124,5 (±5,4) c |
| ExB | 71,3 (±1,0) | 251,8 (±4,8) |

Pour ce qui concerne la capacité antioxydante totale, les fractions MeOH20 à MeOH80 présentent une capacité antioxydante plus forte que l'extrait brut. Là encore, la fraction MeOH100 en est quasiment dépourvue.

### XIII. Résultats pour l'évaluation de la toxicité cellulaire des fractions obtenues à partir des extraits

Les protocoles mis en œuvre sont ceux décrits au point VII.a de la présente partie expérimentale.

### Cytotoxicité sur MDBK

Les essais en incubation simultanées extraits+mycotoxines n'ont pas montré d'effet protecteur. Le choix a donc été fait de pré-incuber les cellules pendant 24 h en présence des extraits végétaux avant l'addition des mycotoxines (48 h).

Après pré-incubation de 24 h, deux extraits montrent des effets protecteurs sur les cellules. Le choix a été fait de purifier ces extraits afin d'étudier l'effet potentiel des fractions qui en sont issues, dans la perspective d'identifier les substances responsables de l'activité anti-mycotoxinique.

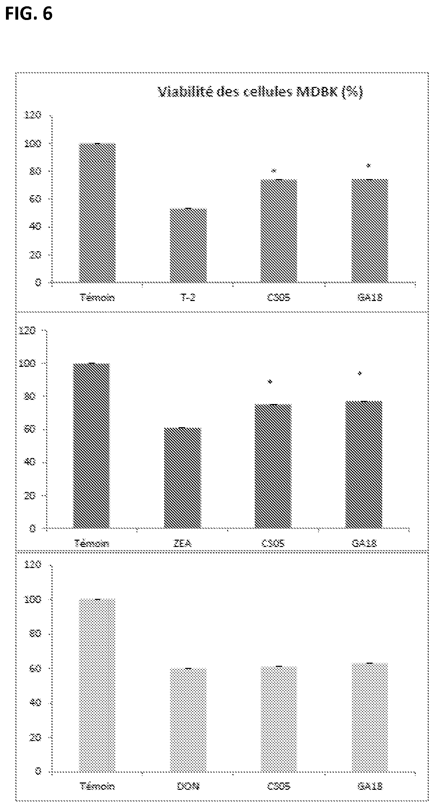

Les résultats obtenus sur les fractions des extraits ne montrent aucune cytotoxicité sur les cellules MDBK : figure 6, montrant l'effet d'une pré-incubation en présence des fractions d'extraits de Cs et Ga à 0,01 µg/mL sur la toxicité induite par les mycotoxines.

### XIV. Résultats pour la détection des modifications membranaires

Les protocoles mis en œuvre sont ceux décrits au point VII.a de la présente partie expérimentale.

Les résultats obtenus sur les fractions montrent un effet de protection cellulaire supérieur aux extraits bruts.

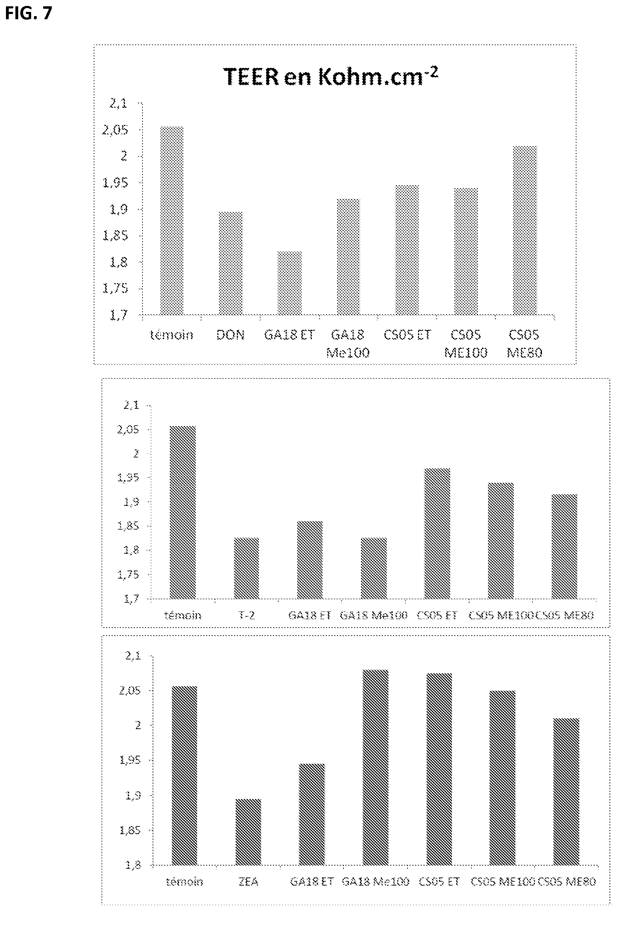

Les résultats présentés dans la figure 7 (Mesures de TEER après 48 h d'incubation des cellules MDBK en présence des extraits d'halophytes et des mycotoxines de type T2 (a), DON (b) ou ZEA (c)) attestent d'un effet toxique des mycotoxines sur l'intégrité de la barrière épithéliale. En présence des extraits végétaux, l'effet protecteur sur la barrière rénale est visible après 48 h. Au contraire, une pré-incubation en présence des extraits végétaux a un effet protecteur sur la barrière rénale après 48 h. Cet effet bénéfique est plus important vis-à-vis de la toxine ZEA et notamment par les fractions de la plante *C. soldanella.* Les résultats montrent enfin que les effets sont variables selon la fraction, selon la plante et selon la toxine.

### XV. Résultats pour la cytotoxicité

Les protocoles mis en œuvre sont ceux décrits au point VII.a de la présente partie expérimentale.

### Etude de cytotoxicité sur les cellules IPEC-J2

Les tests de cytotoxicité des extraits des halophytes *Cs, Hs* et *Ec* sur des cellules porcines de type IPEC-J2 montrent une toxicité à la concentration de 10 µg/mL.

En revanche, aucun effet cytotoxique des extraits n'est observé pour des doses inférieures ou égales à 1 µg/mL. Pour cette raison, la concentration de 0,01 µg/mL a été utilisée pour les études de bioprotection vis-à-vis des mycotoxines.

De même, l'étude de la cytotoxicité de DON et de ZEA sur les cellules IPEC-J2 a permis de sélectionner des concentrations de mycotoxines induisant la mort cellulaire :

### Détermination des concentrations cytotoxiques :

- DON : 2.10⁻⁶ M (60% de mortalité)
- ZEA : 40.10⁻⁶ M (40% de mortalité)

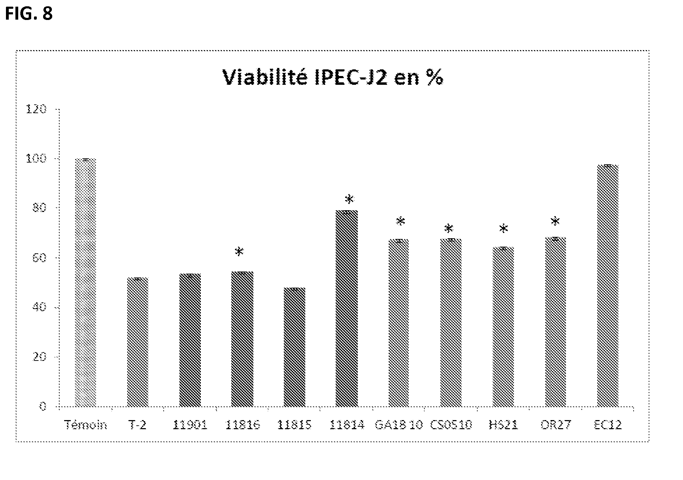

La figure 8 reporte les résultats de viabilité cellulaire après 48 h de traitement avec la toxine T-2, suivant ou non 24 h de pré-incubation avec des extraits bruts d'halophytes à 0,01 µg/mL.

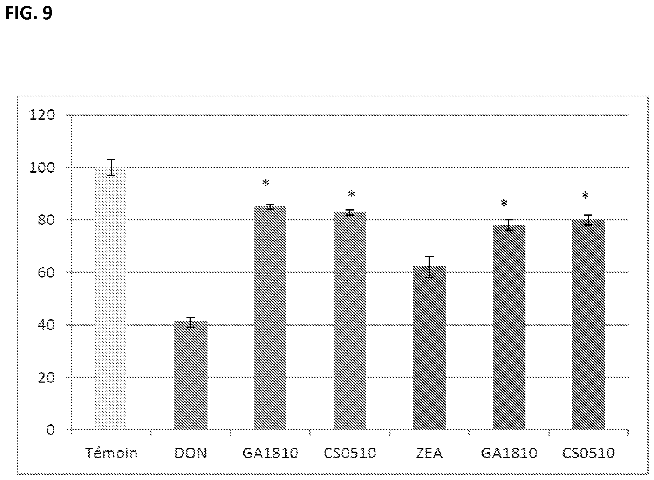

La figure 9 reporte les résultats de viabilité des cellules IPEC-J2 après 48 h de traitement avec les mycotoxines DON et ZEA, suivant ou non 24 h de pré-incubation avec des extraits d'halophytes à 0,01 µg/mL.

Les résultats de viabilité ont permis de sélectionner deux fractions dont l'efficacité est commune sur les trois mycotoxines. Les deux fractions sélectionnées lors des études sur les cellules rénales bovines ont également été testées sur les cellules porcines. Les résultats montrent qu'en présence des deux extraits, la viabilité cellulaire des cellules IPEC-J2 est augmentée par rapport aux cellules exposées aux mycotoxines seules.

### XVI. Résultats de l'expression et de la sécrétion des molécules inflammatoires

Les protocoles mis en œuvre sont ceux décrits au point VII.b de la présente partie expérimentale.

### Etude par la méthode ELISA de la sécrétion des molécules inflammatoires TNF-alpha et IL-8 par les cellules intestinales porcines IPEC-J2 :

Les dosages montrent que la mycotoxine ZEA ne provoque pas la sécrétion des cytokines inflammatoires par les cellules. A l'inverse, DON induit une augmentation des sécrétions de TNF-alpha et d'interleukine-8.

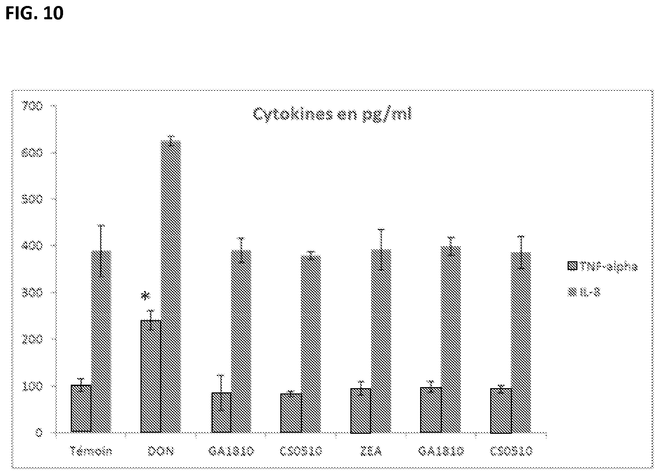

La figure 10 montre que la pré-incubation des cellules IPEC-J2 en présence des extraits d'halophytes diminue la sécrétion des cytokines inflammatoires pour arriver à des niveaux équivalents au témoin.

### Résultats de l'expression de molécules inflammatoires TNF-alpha sur les cellules rénales bovines MDBK par la méthode de western blotting :

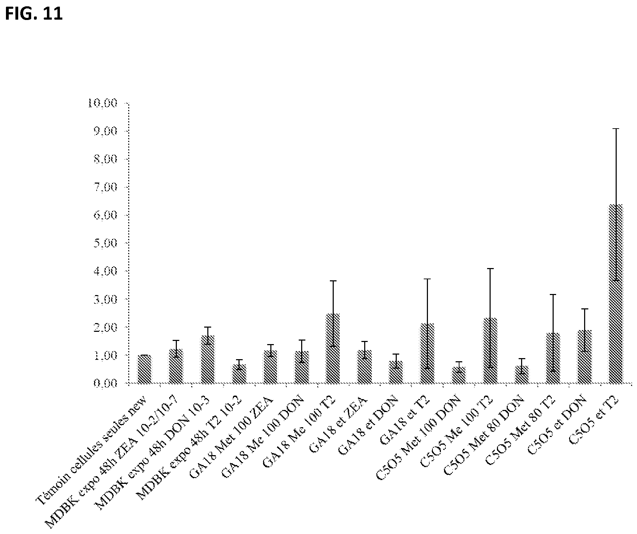

La figure 11 montre l'expression de TNF-alpha sur les cellules MDBK pré-incubées avec les fractions d'extraits puis traitées avec les mycotoxines. Une certaine variabilité de l'expression de TNF-alpha est observée sur les cellules pré-incubées avec les fractions MeOH100 et EtOH de l'extrait de Ga ainsi qu'avec les fractions MeOH 80, MeOH100 et EtOH de l'extrait de Cs. Cependant, l'analyse statistique ne montre aucune différence significative entre les cellules après exposition aux mycotoxines.

### Conclusion pour la partie 1 :

Ces résultats montrent que les halophytes disposent d'un pouvoir anti-mycotoxinique. En effet, le traitement des cellules MDBK et IPEC-J2 avec les extraits bruts de ces plantes a permis de réduire significativement la toxicité des mycotoxines de type T-2 et ZEA, et donc d'induire une meilleure viabilité cellulaire. Les espèces Cs et Ga se sont avérées être les plus efficaces parmi les différentes halophytes étudiées.

L'évaluation de l'activité antioxydante des extraits de ces plantes selon le test de piégeage du radical DPPH a permis de démontrer leur grande activité antiradicalaire. L'extrait de Ga possède aussi un forte capacité antioxydante totale (test CAT), tandis que celui de Cs présente une capacité antioxydante totale relativement limitée. La différence des résultats entre les deux tests est expliquée par les mécanismes des processus antioxydants impliqués qui sont eux-mêmes très différents.

Ces résultats ont mis en évidence les potentialités anti-mycotoxiniques des halophytes. Ils ont également mis en lumière l'implication de molécules hautement antioxydantes comme la quercétine glycosylée, l'acide chlorogénique et l'aspéruloside dans ces activités.

### PARTIE 2

### XVII. Etude in vitro de la viabilité, du stress oxydant et des flux calciques de cellules animales avec et sans ajouts d'extraits d'halophytes

### XVII 1-Protocoles

### 1.1 Matériels biologiques et traitements

### Types cellulaires, mycotoxines et extraits :

Les types cellulaires des lignées de cellule animale sont : IPEC-J2 (cellules intestinales porcines), MDBK (cellules rénales bovines).

Les mycotoxines utilisées pour ces tests sont : le déoxynivalénol (DON) - 4 µl dans les puits ; la zéaralénone (ZEA) - 2 µl dans les puits ; la toxine T2 - 2 µl dans les puits.

Les plantes halophytes utilisées sont :
*Convolvulus soldanella* (Cs) : Cf = 0,1 µg/mL pour IPEC J2 et Cf = 1 µg/mL pour MDBK *Eryngium campestre* (Ec) : Cf = 1 µg/mL pour IPEC J2 et Cf = 10 µg/mL pour MDBK *Galium arenarium* (Ga) : Cf = 1,8 µg/mL pour IPEC J2 et Cf = 0,18 µg/mL (DON et T2) et 1,8 µg/mL (ZEA) pour MDBK.

Les molécules pures issues de *Convolvulus soldanella* sont :
- quercétine 3-O-β-glucoside (P3) : Cf = 2 µg/mL (DON et ZEA) et 4 µg/mL (T2) pour IPEC J2 ; Cf = 4 µg/mL pour MDBK ;
- quercétine 3-*O*-β-glucose-6"-acétate (P4) : Cf = 4 µg/mL pour IPEC J2 et Cf = 4 µg/mL pour MDBK.

### Traitements :

Les traitements sont ceux décrits en partie V: les cellules sont mises à pré-incuber seules pendant 24 heures, puis on ajoute les extraits d'halophytes aux concentrations ci-dessus. 48 heures après le début de la pré-incubation, les mycotoxines sont ajoutées.

96 h après le début de la pré-incubation, les tests de viabilité et la mesure du stress oxydant et des flux calciques sont effectués.

### 1.2 Mesure de la viabilité cellulaire

Le test mis en œuvre est un test MTS, il s'agit d'un test rapide de cytotoxicité permettant la numération des cellules viables grâce à la mesure de l'activité mitochondriale. Les cellules sont cultivées en plaque 96 puits à une concentration de 4.105 cellules/ml (IPEC J2) ou 5.105 cellules/ml (MDBK). Le milieu de chaque puits est enlevé puis 100 µl de PBS 1X additionnés de 20 µL du mélange PMS/MTS (1:20 v/v) sont ajoutés dans chaque puits. La solution PMS/MTS est préparée extemporanément.

Les plaques 96 puits sont incubées à 37°C sous 5% de CO₂ pendant 3 h puis la concentration de formazan est mesurée par spectrophotométrie à 450 nm sur un lecteur de plaques MultiSkan FC.

### 1.3 Etude du stress oxydant

Les cellules sont cultivées en plaque 12 puits à une concentration de 3.10⁵ cellules/mL. Le protocole d'exposition aux halophytes et mycotoxines est réalisé et la mesure des espèces réactives de l'oxygène ou radicaux libres (ROS) est réalisé le 5ème jour. Les Cellules sont récupérées et reprises dans du PBS 1X.

Les cellules du témoin négatif sont incubées avec du NAC (N-acetylcystéine) (Cf=2000 µM) pendant 1 h à 37°C sous 5% de CO₂. Les cellules du contrôle - et du contrôle + sont incubées avec du TBHP (Tert-butyl hydroperoxide) (Cf=200 µM) pendant 1 h à 37°C sous 5% de CO₂.

Du Cell ROX^{®} Green est ensuite ajouté à toutes les cellules à une concentration finale de 500 µM pendant 1 h à 37°C sous 5% de CO₂. Lors des 15 dernières minutes de coloration avec le CellROX, le réactif SYTOX^{®} Red Dead Cell est ajouté afin de colorer les cellules en nécrose.

Les cellules sont ensuite analysées au cytomètre de flux avec les longueurs d'ondes d'excitation suivantes : 488 nm pour le CellROX^{®} Green et 639 nm pour le SYTOX^{®} Red Dead Cell.

### 1.4 Mesures des flux calciques

Les cellules sont cultivées en plaque 96 puits à une concentration de 2.10⁵ cellules/mL. Le protocole d'exposition aux halophytes et mycotoxines est réalisé et la mesure des flux calciques est réalisée le 5^{ème} jour sur une Flex Station.

Le milieu des cellules en plaque 96 puits est enlevé, puis 80 µL de la solution Fura2* sont ajoutés et les cellules sont incubées à 37°C sous 5% de CO₂ pendant 1 h. Le fluorochrome est ensuite enlevé et 80 µL de la solution à 0 Ca²⁺ sont ajoutés.

*Solution Fura 2 : il s'agit d'une sonde fluorescente perméable aux cellules (sonde Fura2-QBT) additionnée d'une molécule chimique pour chélater le calcium. Une augmentation de la concentration en calcium dans le cytoplasme induit l'augmentation de l'intensité de fluorescence à 340 nm grâce à la liaison de la sonde Fura2 au Ca²⁺. L'intensité de fluorescence à 380 nm diminue à mesure que la concentration de la forme non liée de la sonde Fura2 diminue. Le ratio des deux intensités de fluorescence produites par excitation à 340 et 380 nm est ensuite calculé afin d'obtenir une mesure quantitative du taux de Ca²⁺ dans la cellule.

Quand la concentration de Ca²⁺ dans le cytoplasme augmente, l'intensité de la fluorescence 340 nm/510 nm augmente car il y a plus de Ca²⁺ disponible pour le colorant Fura2 avec lequel il se lie. Le flux calcique des cellules est ensuite mesuré grâce à la FlexStation. Une première injection de Thapsigargine à 100 secondes est effectuée puis une seconde injection de solution très concentrée en Ca²⁺ à 500 secondes pour les cellules MDBK et à 750 secondes pour les cellules IPEC J2 est réalisée. La première injection va agir sur les pompes SERCA entrainant la libération de la réserve de Ca²⁺ du réticulum endoplasmique dans le cytoplasme. Lors de la seconde injection, le flux calcique est mesuré grâce à l'influx SOC. En effet, les réserves en calcium étant vides, les canaux SOC vont être activés permettant l'entrée de Ca²⁺ dans la cellule.

### XVII 2-Résultats

### 2.1 Viabilité cellulaire

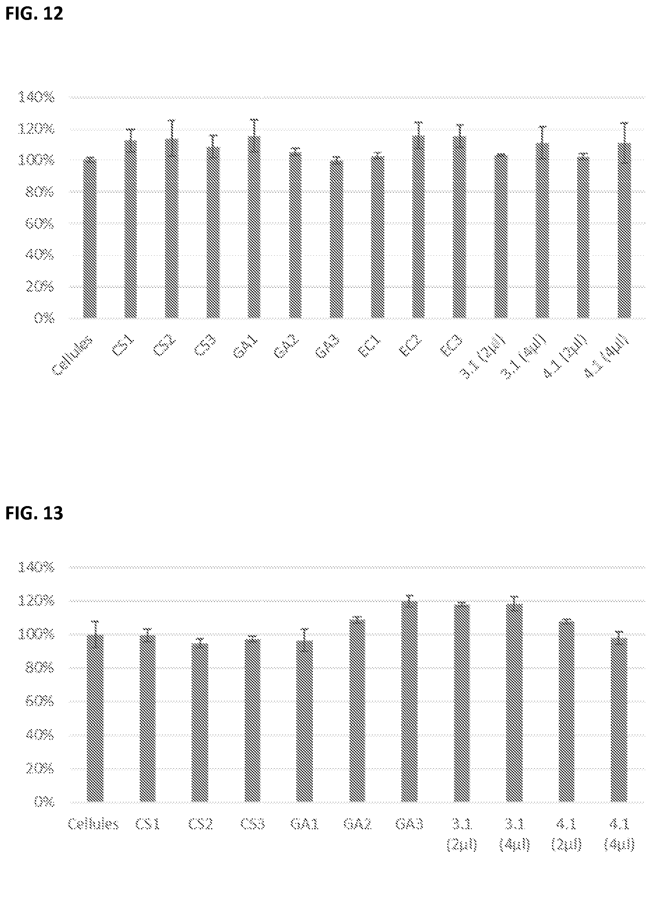

Quelles que soient les concentrations d'extraits d'halophytes testées (0,1 µg/mL, 1 µg/mL, ou 10 µg/mL), aucune mortalité n'est observée sur les cellules intestinales porcines IPEC-J2 (figure 12). Concernant les 2 molécules pures testées (P3 et P4), la même observation peut être faite quelle que soit la concentration utilisée (2 µg/mL ou 4 µg/mL).

Par ailleurs, quelles que soit les concentrations d'extraits d'halophytes et de molécules pures testées, aucune mortalité n'est observée sur les cellules rénales bovines MBDK (figure 13).

### 2.2 Stress oxydant - Dosage des espèces réactives à l'oxygène

### a. Cellules non traitées

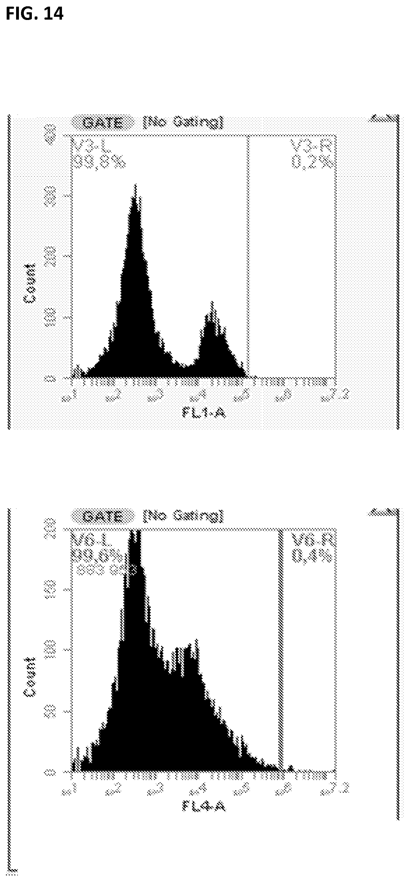

Le signal de fluorescence de la formation de ROS (fenêtre V3-R) et le taux de cellules en nécrose (fenêtre V6-R) dans les cellules non traitées sont montrés en figure 14.

### b. Cellules en présence des extraits d'halophytes seules

Le signal de fluorescence spécifique aux ROS est observé dans la fenêtre V3-R. Le signal en V6-R représente les cellules en nécrose.

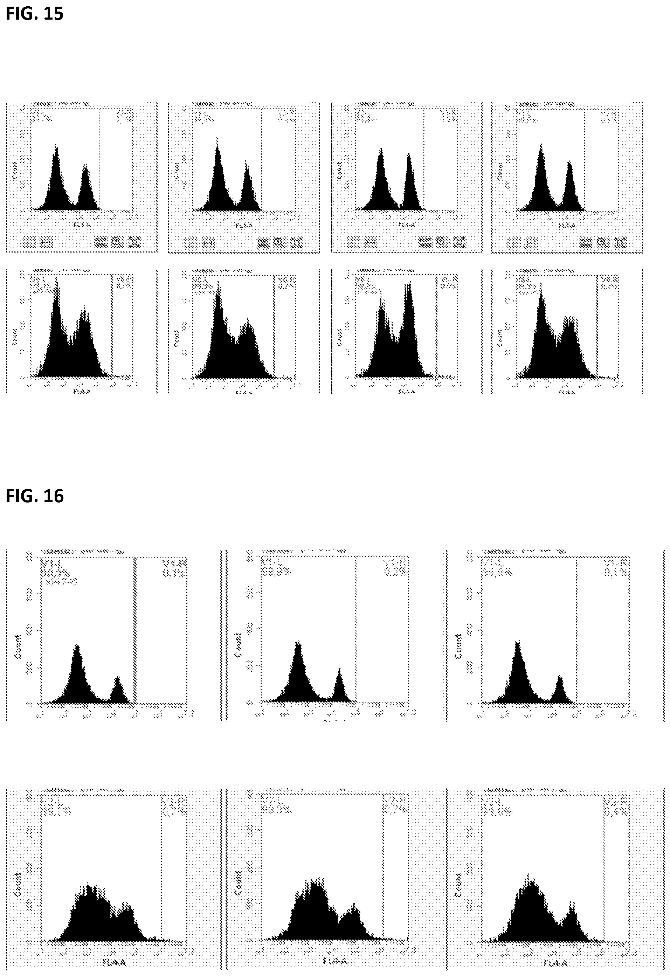

Ces résultats sont illustrés sur la figure 15 où sont représentés les effets des halophytes (extraits bruts seuls) et de la molécule pure P3 (quercétine 3-O-β-glucoside) sur la formation de ROS et la nécrose de cellules IPEC-J2 ; avec respectivement, de la colonne de gauche à celle de droite : un extrait de *Convolvulus,* un extrait *d'Eryngium,* un extrait de *Galium* et la *quercéine* 3-O-β-glucoside (P3).

Aucun stress oxydant n'est observé dans les cellules animales en présence des extraits bruts d'halophytes ou des molécules pures P3 et P4 (figure 15). De même, aucune augmentation significative du nombre de cellules en nécrose n'apparait en présence des halophytes.

### c. Cellules en présence de DON

L'addition des halophytes 24 h avant l'exposition au déoxynivalénol diminue le stress oxydant engendré par DON seul ainsi que le nombre de cellules nécrotiques. Les mêmes observations peuvent être faites pour P3 et P4.

Ces résultats sont illustrés sur les figures :
Figure 16 : qui montre les effets des halophytes (extraits bruts seuls) sur la formation de ROS et de nécrose dans les cellules IPEC-J2 exposées à DON ; avec respectivement, de la colonne de gauche à celle de droite : DON+ *Convolvulus, DON+Eryngium* et *DON+Galium.*

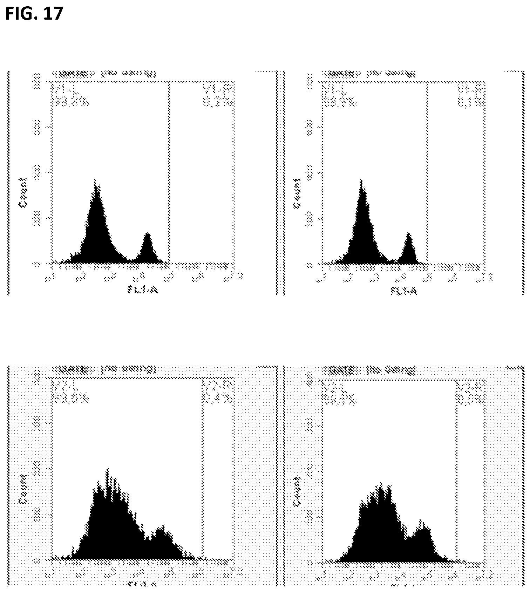

Figure 17 : qui montre les effets des molécules pures P3 et P4 sur la formation de ROS et de nécrose dans les cellules IPEC-J2 exposées à DON ; avec respectivement, de la colonne de gauche à celle de droite : P3 et P4.

### d. Cellules en présence de T-2

Le signal de fluorescence spécifique au ROS est observé dans la fenêtre V3-R. Le signal en V6-R représente les cellules en nécrose. Le stress oxydant représenté par la formation de ROS est étudié en présence de la toxine T-2 et des extraits d'halophytes. L'addition des halophytes permet d'obtenir des niveaux de ROS et de cellules en nécroses équivalents aux cellules témoins non intoxiquées.

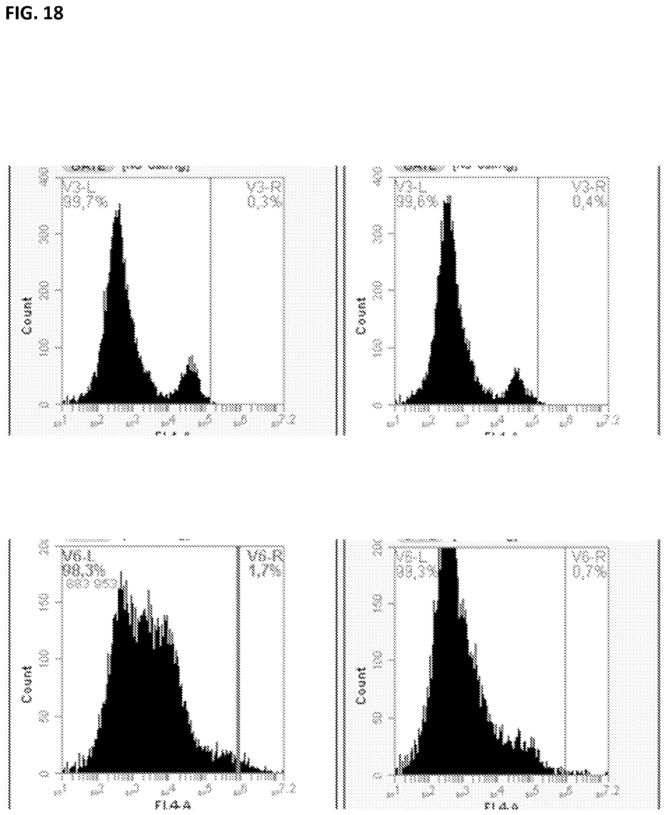

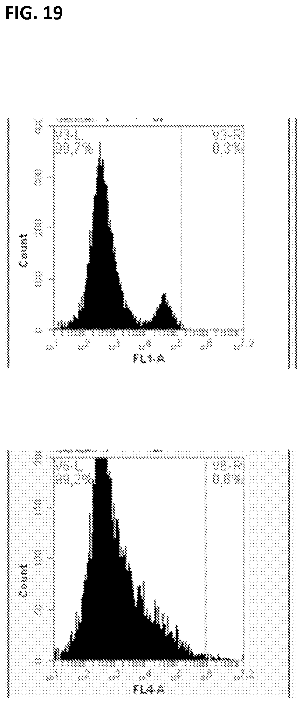

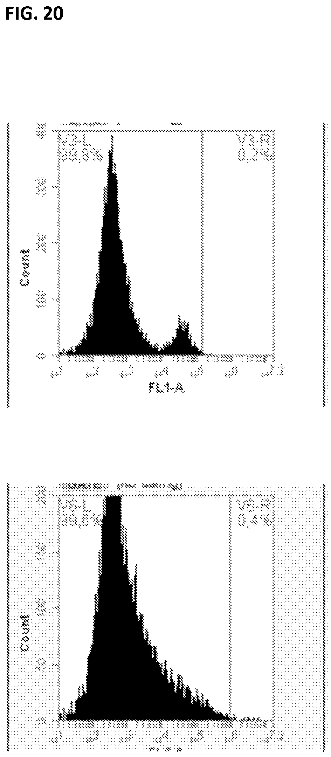

Voir les figures 18, 19 et 20 où sont représentés pour la fig. 18 de gauche à droite T2+ *Convolvulus, T2+Eryngium* et pour la fig. 19 *T2+Galium,* et la figure 20 pour T2+P3.

### 2.3 Modification des flux calciques

### A - Effets sur les canaux SOC des IPEC-J2

### A1- extraits seuls

Les extraits de *Convolvulus* et *Galium,* ainsi que les deux molécules pures (P3 et P4) à faible concentration, provoquent une augmentation de l'influx SOC.

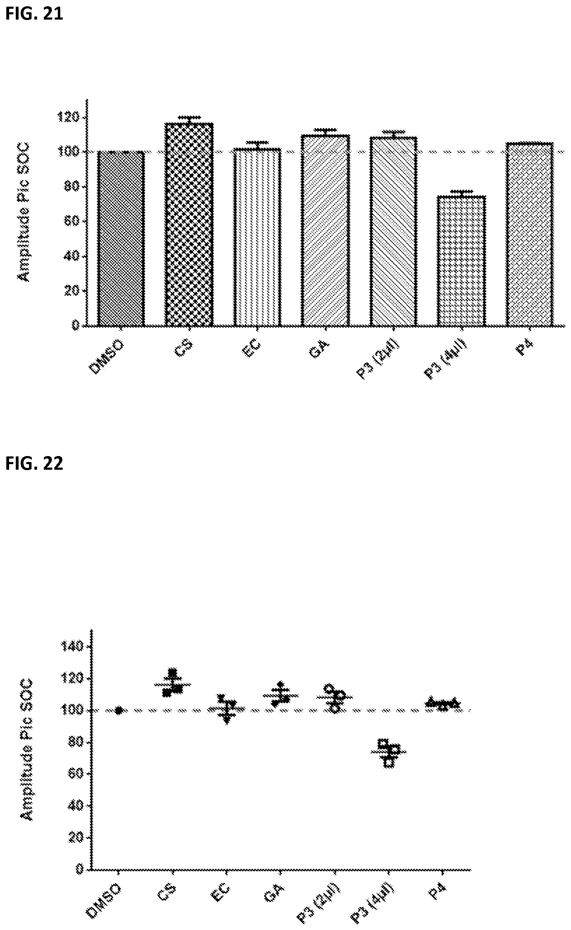

Les figures 21 et 22 montrent l'effet des extraits brut seuls et des molécules pures sur le pic SOC en % du contrôle non traité sur une lignée IPEC J2.

### A2- en présence de DON

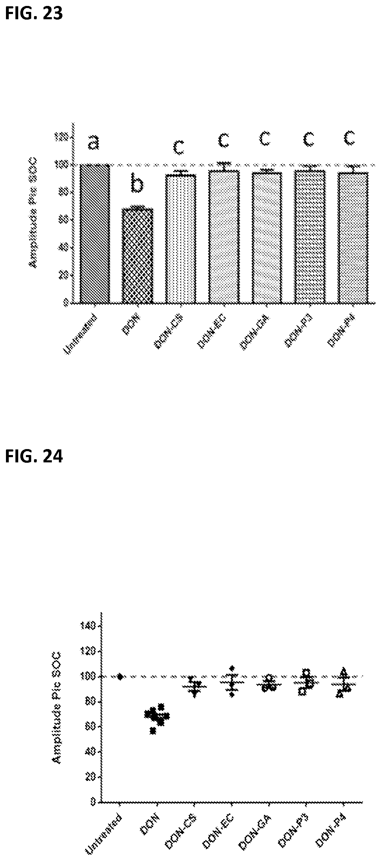

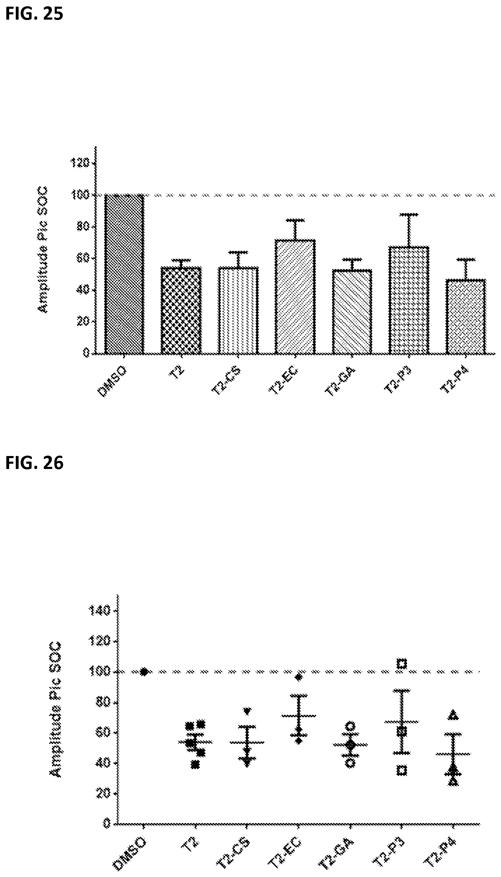

Les figures 24 et 25 présentent les effets des halophytes (extraits bruts seuls) et des molécules pures (P3 et P4) sur les canaux SOC des cellules IPEC-J2 exposées à DON. Tests de comparaison de moyennes :
a :DON vs Témoin : 0,0001
c :DON vs DON+Cs : 0,0005
c :DON vs DON+Ec : 0,0001
c :DON vs DON+Ga : 0,0002
c :DON vs DON+P3 : 0,0001
c :DON vs DON+P4 : 0,0002

En présence de DON, on observe une diminution nette du pic SOC. L'addition préalable des extraits d'halophytes ou des molécules pures permet de maintenir l'influx au niveau des cellules témoins (non intoxiquées).

### A3- En présence de T-2

Les figures 25 et 26 représentent les effets des halophytes (extraits bruts seuls) et des molécules pures (P3 et P4) sur les canaux SOC des cellules IPEC-J2 exposées à la toxine T-2.

Les résultats en présence de T-2 ne montrent pas d'effets des extraits sur l'influx SOC. Une légère augmentation avec l'extrait Ec et la molécule P3 est observée mais non significative.

En résumé, les extraits d'halophytes ont un effet positif sur les flux calciques dans les cellules intestinales porcines IPEC-J2 en cas d'intoxication avec la mycotoxine DON. En présence de T-2 en revanche, aucune modification n'est observée donc aucun effet protecteur n'a pu être mis en évidence.

### B- Effets sur les canaux SOC des cellules rénales bovines MDBK

### B.1 En présence des extraits ou molécules pures seuls

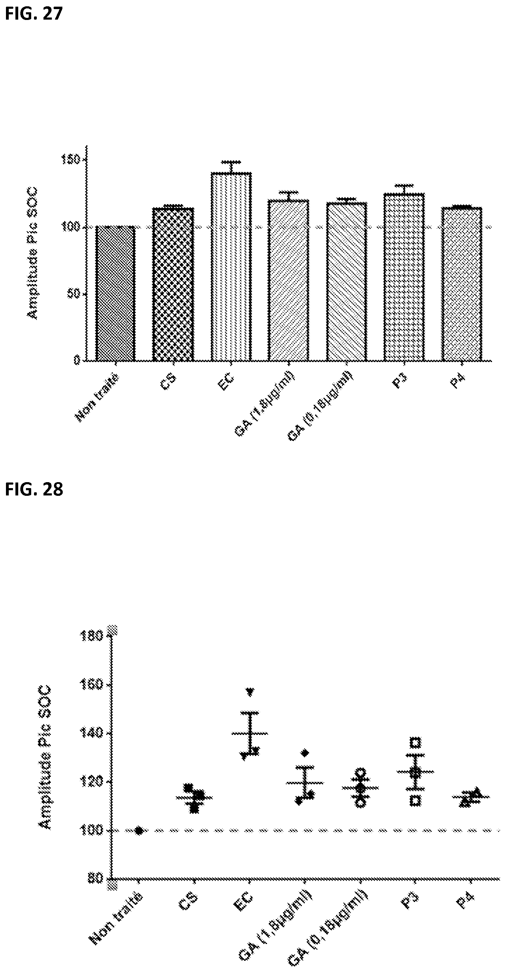

Les figures 27 et 28 représentent les effets des extraits d'halophytes (extraits bruts seuls) et des molécules pures P3 et P4 sur les canaux SOC des cellules MDBK. Les extraits des 3 espèces d'halophytes ainsi que les 2 molécules pures augmentent l'influx SOC.

### B.2 En présence de DON

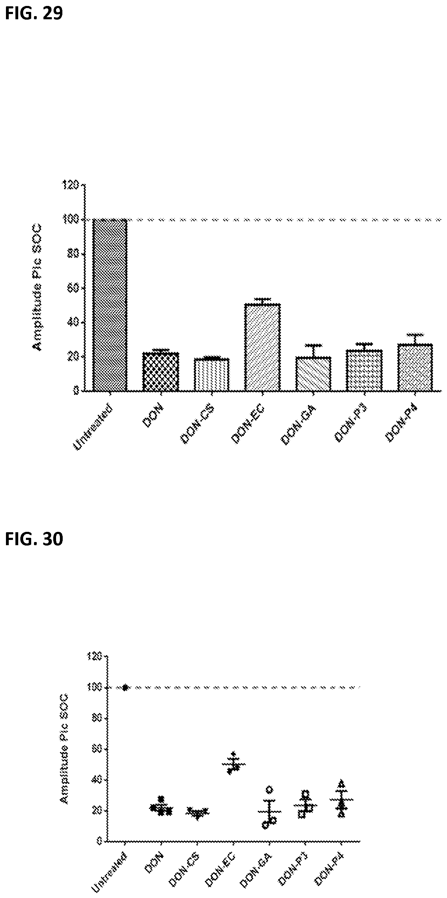

Les figures 29 et 30 représentent les effets des halophytes (extraits bruts seuls) et des molécules pures P3 et P4 sur les canaux SOC des cellules MDBK exposées à DON.

Parmi les extraits et molécules testés, seul l'extrait *d'Eryngium campestre* (Ec) permet de maintenir partiellement l'influx SOC. Ce dernier est très affecté (-80%) dans les cellules intoxiquées au DON.

### B.3 En présence de ZEA

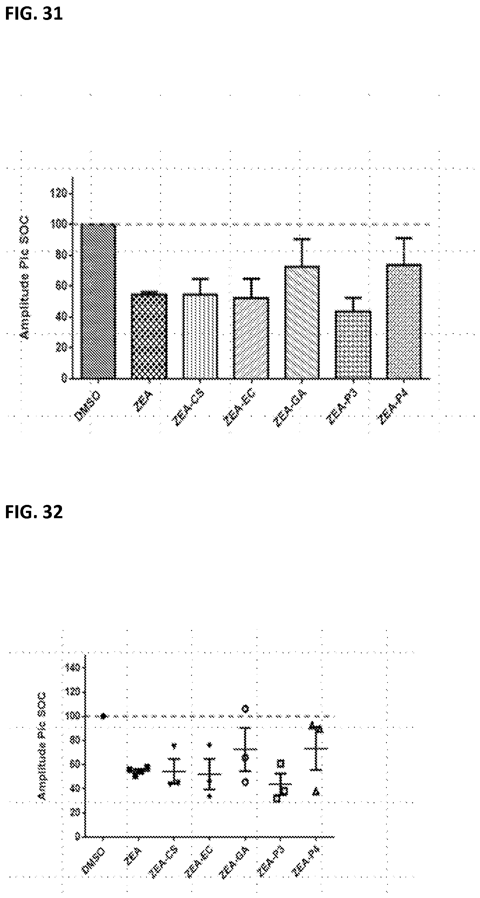

Les figures 31 et 32 représentent les effets des halophytes (extraits bruts seuls) et des molécules pures P3 et P4 sur les canaux SOC des cellules MDBK exposées à ZEA.

En présence de ZEA (4.10⁻⁵ M), on n'observe pas d'effets des extraits sur l'influx SOC, sauf une légère augmentation (mais non significative) avec Ga et P4.

### B.4 En présence de T-2

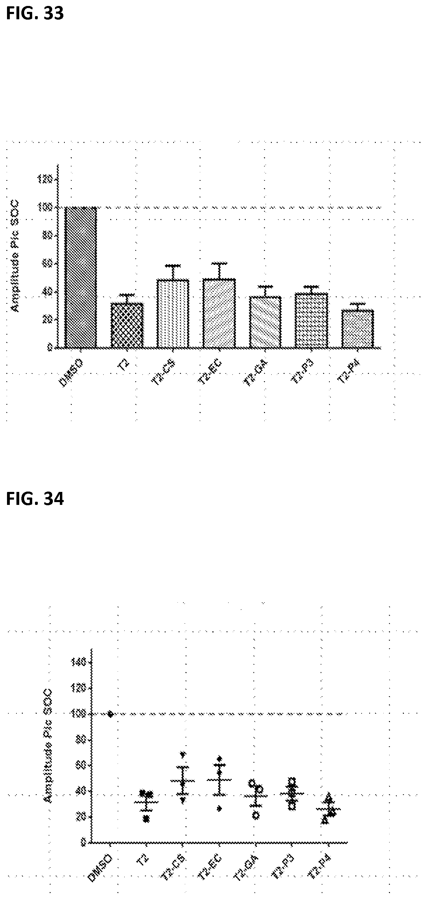

Les figures 33 et 34 représentent les effets des halophytes (extraits bruts seuls) et des molécules pures P3 et P4 sur les canaux SOC des cellules MDBK exposées à la toxine T-2.

En présence de la toxine T-2 (0,8.10⁻⁸ M), on n'observe pas d'effet très net des extraits sur l'influx SOC. On observe seulement une légère augmentation (mais non significative) avec les extraits Cs et Ec.

### Conclusion pour la partie 2 :

Les halophytes seules n'ont pas d'effet cytotoxique sur les cellules IPEC-J2 ni MDBK jusqu'à 10 µg/mL. Les mycotoxines DON et T-2 créent un stress oxydant sur les cellules IPEC-J2, lequel peut être diminué (la formation de ROS à l'origine de ce stress diminue) par un traitement préalable avec les différents extraits d'halophytes testés. Les halophytes seules n'induisent pas de formation de ROS. L'effet antioxydant des halophytes en présence de DON et T-2 a donc été mis en évidence.

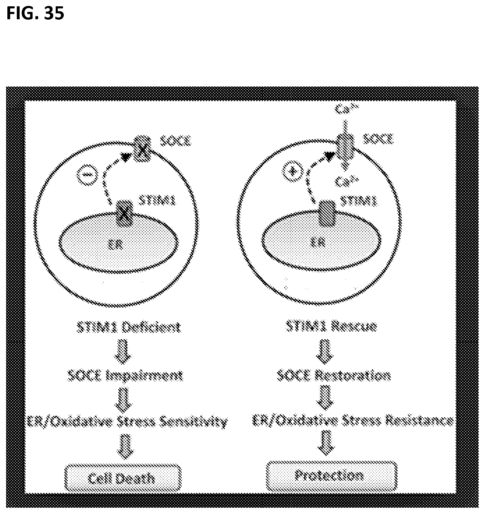

Les extraits seuls augmentent l'influx de calcium (pic SOC) chez les deux types cellulaires. En présence des trois extraits halophytes sélectionnés (Cs, Ec et Ga), l'impact négatif de DON sur l'entrée de calcium dans les cellules IPEC-J2 est inhibé, montrant un effet positif des halophytes sur les flux calciques des cellules porcines. Chez les cellules rénales bovines (MDBK), seule *Eryngium campestre* a un effet positif en présence de DON. Grâce aux influx de Ca²⁺, faisant intervenir différents organites cellulaires, les vertébrés peuvent assurer différentes fonctions physiologiques dont l'une des principales est le renouvellement cellulaire (cf. figure 35 qui montre le système SOC et la mort cellulaire).

Ces résultats permettent d'affirmer que les espèces d'halophytes, et plus particulièrement les trois espèces décrites en détail dans la présente partie expérimentale ont le potentiel de réduire chez des cellules animales le stress oxydant lié à une exposition aux mycotoxines. En particulier, ces espèces permettent de protéger les cellules intestinales porcines contre les modifications de flux calciques induits par une exposition au déoxynivalénol (DON). Ce même effet est observé chez les cellules rénales bovines en présence *d'Eryngium campestre.*

### Conclusions générales de la partie expérimentale

- Testés seuls, les extraits des espèces d'halophytes *(Convolvulus soldanella,* Cs ; *Eryngium campestre,* Ec ; *Galium arenarium,* Ga) ne présentent aucune toxicité *in vitro* sur les cellules intestinales porcines (IPEC J2) ou rénales bovines (MDBK). Il en est de même pour les 2 molécules majeures (composés phénoliques) qui ont été purifiées chez Cs et testées seules.
- Les mycotoxines de type déoxynivalénol (DON) ou toxine T2 exercent un stress oxydant sur les cellules animales ci-dessus, ce qui conduit à leur altération et pour une grande part à leur mort. Ce stress oxydant peut être empêché par une exposition préalable (donc un effet préventif) des cellules à l'un ou l'autre des extraits étudiés. Ces plantes halophytes présentent donc une activité cytoprotectrice contre l'intoxication de cellules par les mycotoxines. Il en est de même pour les deux molécules majeures purifiées à partir de l'une de ces plantes (Cs).
- Les mycotoxines altèrent les flux calciques dans les cellules animales étudiées, ce qui pourrait expliquer leur mort suite à une intoxication. Un traitement préalable des cellules IPEC J2 avec les extraits d'halophytes ou les deux molécules purifiées permet de maintenir intact ces flux calciques, notamment en cas d'intoxication par le DON. Les effets sont moins nets avec les cellules bovines (MDBK).

## Revendications

1. Extrait d'une plante halophyte pour son utilisation dans le traitement ou la prévention d'une mycotoxicose induite par l'une des mycotoxines déoxynivalénol DON, zéaralènone ZEA et T2 produites par *Fusarium,* et dans laquelle ledit extrait se présente dans un complément alimentaire bovin ou porcin et :
- est un extrait hydroalcoolique d'un organe aérien de plante appartenant aux genres *Convolvulus , Galium, et Eryngium,* et
- est issu d'un surnageant dudit extrait hydroalcoolique ayant été centrifugé, filtré et évaporé jusqu'à l'obtention d'un extrait sec.

2. Extrait d'une plante halophyte pour son utilisation selon la revendication 1, dans lequel l'extrait de plante halophyte est sélectionné parmi *Galium arenarium, Eryngium campestre, et Convolvulus soldanella.*

3. Extrait d'une plante halophyte pour son utilisation selon la revendication 1, dans lequel l'extrait de plante halophyte est choisi parmi au moins un extrait de *Convolvulus soldanella* et un extrait de *Galium arenarium.*

4. Extrait d'une plante halophyte pour son utilisation selon l'une des revendications 1 à 3, dans lequel l'extrait de plante halophyte comprend au moins une molécule sélectionnée parmi de l'aspéruloside, de la quercétine, de l'acide chlorogénique et de la myricétine.

5. Extrait d'une plante halophyte pour son utilisation selon l'une des revendications 1 à 4, dans lequel la mycotoxine est T2.

6. Extrait d'une plante halophyte pour son utilisation selon l'une des revendications 1 à 5, dans laquelle la mycotoxycose atteint des cellules intestinales porcines, telles que des cellules IPEC J2, ou des cellules rénales bovines, telles que des cellules MBDK.

## Patentansprüche

1. Extrakt einer Halophytenpflanze zur Verwendung bei der Behandlung oder Vorbeugung einer Mykotoxikose, die durch eines der von *Fusarium* produzierten Mykotoxine Deoxynivalenol DON, Zearalenon ZEA und T2 verursacht wird, und wobei der Extrakt in einem Nahrungsergänzungsmittel für Rinder oder Schweine vorliegt ist und:
- ein hydroalkoholischer Extrakt aus einem oberirdischen Organ einer Pflanze der Gattungen *Convolvulus, Galium und Eryngium* ist, und
- aus einem Überstand des hydroalkoholischen Extrakts stammt, der zentrifugiert, gefiltert und eingedampft wurde, bis ein Trockenextrakt erhalten wurde.

2. Extrakt einer Halophytenpflanze zur Verwendung nach Anspruch 1, wobei der Halophytenpflanzenextrakt aus *Galium arenarium, Eryngium campestre und Convolvulus soldanella* ausgewählt ist.

3. Extrakt einer Halophytenpflanze zur Verwendung nach Anspruch 1, wobei der Halophytenpflanzenextrakt aus mindestens einem Extrakt aus *Convolvulus soldanella* und einem Extrakt aus *Galium arenarium* ausgewählt ist.

4. Extrakt einer Halophytpflanze zur Verwendung nach einem der Ansprüche 1 bis 3, wobei der Halophytpflanzenextrakt mindestens ein Molekül umfasst, das aus Asperulosid, Quercetin, Chlorogensäure und Myricetin ausgewählt ist.

5. Extrakt einer Halophytenpflanze zur Verwendung nach einem der Ansprüche 1 bis 4, wobei das Mykotoxin T2 ist.

6. Extrakt einer Halophytenpflanze zur Verwendung nach einem der Ansprüche 1 bis 5, wobei die Mykotoxikose Schweinedarmzellen, wie J2-IPEC-Zellen, oder Rindernierenzellen, wie MBDK-Zellen, befällt.

## Claims

1. An extract of a halophyte plant for use in the treatment or prevention of mycotoxicosis induced by one of the mycotoxins deoxynivalenol DON, zearalenone ZEA and T2 produced by *Fusarium,* and wherein said extract is present in a bovine or porcine food supplement and:
- is a hydroalcoholic extract of an above-ground part of a plant belonging to the genera *Convolvulus, Galium, and Eryngium,* and
- is derived from a supernatant of said hydroalcoholic extract that has been centrifuged, filtered and evaporated until obtaining a dry extract.

2. The extract of a halophyte plant for use according to claim 1, wherein the extract of halophyte plant is selected from among *Galium arenarium, Eryngium campestre,* and *Convolvulus soldanella.*

3. The extract of a halophyte plant for use according to claim 1, wherein the extract of halophyte plant is selected from among at least one extract of *Convolvulus soldanella* and an extract of *Galium arenarium.*

4. The extract of a halophyte plant for use according to one of claims 1 to 3, wherein the extract of halophyte plant comprises at least one molecule selected from among asperuloside, quercetin, chlorogenic acid, and myricetin.

5. The extract of a halophyte plant for use according to one of claims 1 to 4, wherein the mycotoxin is T2.

6. The extract of a halophyte plant for use according to one of claims 1-5, wherein the mycotoxicosis reaches porcine intestinal cells, such as J2 IPEC cells, or bovine kidney cells, such as MBDK cells.
